# EUROPEAN PATENT APPLICATION

(11) **EP 2 808 246 A1**
(43) Date of publication of application: **03.12.2014**
(21) Application number: 13740744.1
(22) Date of filing: 15.01.2013
(51) Int. Cl.: B63B 59/04, C09J 5/00, C09J 7/02, C09J 201/00

(54) **METHOD FOR PREVENTING FOULING**

(30) Priority: 27.01.2012 JP 2012015208; 27.01.2012 JP 2012015209
(71) Applicant: Nitto Denko Corporation, Ibaraki-shi, Osaka 567-8680 (JP)
(72) Inventor: HARA, Kazutaka, Ibaraki-shi Osaka 567-8680 (JP); KURATA, Naoki, Ibaraki-shi Osaka 567-8680 (JP); NAITO, Tomonari, Ibaraki-shi Osaka 567-8680 (JP); SUEYOSHI, Taiki, Ibaraki-shi Osaka 567-8680 (JP); SUZUKI, Satoru, Ibaraki-shi Osaka 567-8680 (JP); MARUYAMA, Koji, Ibaraki-shi Osaka 567-8680 (JP)
(74) Representative: Müller-Boré & Partner Patentanwälte PartG mbB
(86) International application number: PCT/JP2013/050521
(87) International publication number: WO 2013/111634

(57) **Abstract**

The present invention provides a method of preventing fouling of a structure. The method of preventing fouling of a structure includes the following steps: (step 1) preparing an antifouling pressure-sensitive adhesive tape including a base material layer (A) and a pressure-sensitive adhesive layer (A), and an easily adhering pressure-sensitive adhesive tape including a base material layer (B) easily adhering to the pressure-sensitive adhesive layer (A) and a pressure-sensitive adhesive layer (B) ; (step 2a-1) bonding the easily adhering pressure-sensitive adhesive tape onto a surface of a structure to be prevented from being fouled, and (step 2a-2) bonding the antifouling pressure-sensitive adhesive tape onto the bonded easily adhering pressure-sensitive adhesive tape so that lengthwise directions of the antifouling pressure-sensitive adhesive tape and the easily adhering pressure-sensitive adhesive tape are non-parallel with each other, or (step 2b) bonding the two or more antifouling pressure-sensitive adhesive tapes and the at least one easily adhering pressure-sensitive adhesive tape onto a surface of a structure to be prevented from being fouled so that the antifouling pressure-sensitive adhesive tapes are prevented from overlapping each other and a junction between the antifouling pressure-sensitive adhesive tapes is on a surface of the base material layer (B) of the easily adhering pressure-sensitive adhesive tape.

## Description

### Technical Field

The present invention relates to a method of preventing fouling of a structure having a surface to be prevented from being fouled.

### Background Art

An aquatic organism such as a barnacle, an oyster, a blue mussel, a hydra, a serpula, a sea squirt, a moss animal, a sea lettuce, green laver, or attached diatom has been adhering to a surface of an underwater structure such as a ship, a buoy, a harbor facility, a maritime oil field facility, a cooling water supply line for a power plant, or a cooling water supply line for a factory in contact with water to proliferate, thereby causing an unpreferred state such as a reduction in facility mechanical performance, e.g. , an increase in fluid resistance or a reduction in thermal conductivity, or dif fusion of the adhering aquatic organism into water. In addition, an operation of removing the adhering aquatic organism requires a great deal of labor and an enormous amount of time, which results in economic loss.

Hitherto, the underwater structure has been painted with an antifouling paint in order that such damage as described above maybe prevented. However, when the antifouling paint is dried after its painting, about 30 wt% of an organic solvent (VOC) volatilizes to adversely affect a work environment or a surrounding environment. In spray-type painting, in addition to discharge of the VOC to the atmosphere, 10 wt% to 20 wt% of the paint is said to be scattered to the surroundings by the wind, which adversely affects the environment to a great extent.

In view of the foregoing, prevention of the adhesion of the aquatic organism by bonding of an antifouling pressure-sensitive adhesive tape including a base material made of copper or a copper alloy onto the surface of the underwater structure in contact with water has been proposed (Patent Literature 1 or 2). Antifouling treatment involving using such antifouling pressure-sensitive adhesive tape has the following advantages. The discharge of the VOC to the environment is reduced, a change in quality of a coating film due to a change in application environment does not occur, and a difference in ability to apply between appliers does not occur. Meanwhile, such problems as described below may occur.

That is, in the antifouling treatment involving using the antifouling pressure-sensitive adhesive tape, a plurality of antifouling pressure-sensitive adhesive tapes are bonded. Accordingly, there arise a problem in that a junction between the tapes occurs and the pressure-sensitive adhesive tapes peel from the junction, and a problem in that the presence of a gap in the junction allows the aquatic organism to enter the gap to directly adhere to the surface in contact with water.

The peeling from the junction can be suppressed by reinforcing the adhesive strength of each antifouling pressure-sensitive adhesive tape to the surface in contact with water. In this case, however, the following problem arises. It becomes extremely difficult to peel and remove a deteriorated antifoulingpressure-sensitive adhesive tape, and hence workability at the time of reapplication remarkably reduces. In addition, the following method is conceivable as a method of removing the gap in the junction. The adjacent antifouling pressure-sensitive adhesive tapes are bonded while the tapes are butted against each other without any gap or their end portions are caused to overlap each other. However, it is difficult to completely prevent occurrence of a gap due to expansion or swelling of the antifouling pressure-sensitive adhesive tape, or an application mistake.

In addition, in the case of a surface having a sharp bent portion, it may be difficult to bond the antifouling pressure-sensitive adhesive tape along the shape of the surface.

In addition, when the peeling of the pressure-sensitive adhesive tape occurs, the peeling may progress owing to a fluid resistance such as a water flow or an air flow to cause the pressure-sensitive adhesive tape to fall.

The peeling can be suppressed by reinforcing the adhesive strength of the antifouling pressure-sensitive adhesive tape to the surface in contact with water. However, such method of suppressing the peeling is not realistic because it becomes extremely difficult to peel and remove the deteriorated antifouling pressure-sensitive adhesive tape from the surface in contact with water, and hence the workability at the time of reapplication remarkably reduces.

### Citation List

### Patent Literature

[PTL 1] JP 63-62487 B
[PTL 2] JP 04-27076 B

### Summary of Invention

### Technical Problem

An object of the present invention is to provide a method of preventing fouling of a structure involving using antifouling pressure-sensitive adhesive tapes, the method being capable of solving the conventional problems such as the peeling of the antifouling pressure-sensitive adhesive tapes from their junction, the adhesion of an aquatic organism in a gap between the antifouling pressure-sensitive adhesive tapes, poor workability with respect to a bent portion, and the falling of the antifouling pressure-sensitive adhesive tapes.

### Solution to Problem

According to one embodiment of the present invention, there is provided a method of preventing fouling of a structure. The method includes the following steps:
(step 1) preparing an antifouling pressure-sensitive adhesive tape including a base material layer (A) and a pressure-sensitive adhesive layer (A) formed on one surface side of the base material layer (A), and an easily adhering pressure-sensitive adhesive tape including a base material layer (B) having one surf ace easily adhering to the pressure-sensitive adhesive layer (A) and a pressure-sensitive adhesive layer (B) formed on the other surface side of the base material layer (B); and
(step 2a-1) bonding the easily adhering pressure-sensitive adhesive tape onto a surface of a structure to be prevented from being fouled, and
(step 2a-2) bonding the antifouling pressure-sensitive adhesive tape onto the bonded easily adhering pressure-sensitive adhesive tape so that lengthwise directions of the antifouling pressure-sensitive adhesive tape and the easily adhering pressure-sensitive adhesive tape are non-parallel with each other, or
(step 2b) bonding the two or more antifouling pressure-sensitive adhesive tapes and the at least one easily adhering pressure-sensitive adhesive tape onto a surface of a structure to be prevented from being fouled so that the antifouling pressure-sensitive adhesive tapes are prevented from overlapping each other and a junction between the antifoulingpressure-sensitive adhesive tapes is on a surface of the base material layer (B) of the easily adhering pressure-sensitive adhesive tape.

In a preferred embodiment, the step 2a-1 includes bonding the easily adhering pressure-sensitive adhesive tapes to be parallel with each other.

In a preferred embodiment, the step 2a-1 includes bonding the easily adhering pressure-sensitive adhesive tapes in a lattice manner.

In a preferred embodiment, the step 2a-1 includes bonding the easily adhering pressure-sensitive adhesive tapes so that respective lengthwise directions and/or intervals of the easily adhering pressure-sensitive adhesive tapes are random.

In a preferred embodiment, the step 2a-2 includes bonding the antifouling pressure-sensitive adhesive tape so that the lengthwise direction of the easily adhering pressure-sensitive adhesive tape and the lengthwise direction of the antifouling pressure-sensitive adhesive tape form an angle of from 30° to 150°.

In a preferred embodiment, the step 2b includes bonding the antifouling pressure-sensitive adhesive tapes after the easily adhering pressure-sensitive adhesive tape is bonded onto the surface of the structure to be prevented from being fouled.

In a preferred embodiment, the step 2b includes: bonding the antifouling pressure-sensitive adhesive tape onto the surface of the base material layer (B) of the easily adhering pressure-sensitive adhesive tape so that the antifouling pressure-sensitive adhesive tape is shifted by a predetermined width and lengthwise directions thereof are aligned to be substantially parallel with each other; and bonding two or more sets of the antifouling pressure-sensitive adhesive tape and the easily adhering pressure-sensitive adhesive tape bonded onto each other onto the surface of the structure to be prevented from being fouled while causing the sets, to overlap each other with a shift so that the antifouling pressure-sensitive adhesive tapes are prevented from overlapping each other and the junction between the antifouling pressure-sensitive adhesive tapes is on the surface of the base material layer (B) of the easily adhering pressure-sensitive adhesive tape.

In a preferred embodiment, the step 2b includes: alternately bonding the antifouling pressure-sensitive adhesive tapes and the easily adhering pressure-sensitive adhesive tape so that the antifouling pressure-sensitive adhesive tapes are prevented from overlapping each other and the junction between the antifouling pressure-sensitive adhesive tapes is on the surface of the base material layer (B) of the easily adhering pressure-sensitive adhesive tape; and bonding the antifouling pressure-sensitive adhesive tapes and the easily adhering pressure-sensitive adhesive tape bonded onto each other onto the surface of the structure to be prevented from being fouled.

In a preferred embodiment, the surface of the structure to be prevented from being fouled has a bent portion and the easily adhering pressure-sensitive adhesive tape is arranged at a tip of the bent portion.

In a preferred embodiment, the antifouling pressure-sensitive adhesive tape further includes an antifouling layer on a surface side of the base material layer (A) on which the pressure-sensitive adhesive layer (A) is not formed.

In a preferred embodiment, the surface of the structure to be prevented from being fouled includes a surface of an underwater structure.

According to another aspect of the present invention, there is provided a pressure-sensitive adhesive tape set for the method of preventing fouling of a structure. The pressure-sensitive adhesive tape set includes: an antifouling pressure-sensitive adhesive tape including a base material layer (A) and a pressure-sensitive adhesive layer (A) formed on one surface side of the base material layer (A); and an easily adhering pressure-sensitive adhesive tape including a base material layer (B) having one surface easily adhering to the pressure-sensitive adhesive layer (A) andapressure-sensitive adhesive layer (B) formed on the other surface side of the base material layer (B).

In a preferred embodiment, the antifouling pressure-sensitive adhesive tape is bonded onto the surface of the base material layer (B) of the easily adhering pressure-sensitive adhesive tape so that the antifouling pressure-sensitive adhesive tape is shifted by a predetermined width and lengthwise directions thereof are aligned to be substantially parallel with each other.

In a preferred embodiment, the antifouling pressure-sensitive adhesive tapes and the easily adhering pressure-sensitive adhesive tape are alternately bonded so that the antifouling pressure-sensitive adhesive tapes are prevented from overlapping each other and the junction between the antifouling pressure-sensitive adhesive tapes is on the surface of the base material layer (B) of the easily adhering pressure-sensitive adhesive tape.

According to still another aspect of the present invention, there is provided a structure. The structure includes a surface to be prevented from being fouled, in which at least part of the surface has bonded thereonto an antifouling pressure-sensitive adhesive tape including a base material layer (A) and a pressure-sensitive adhesive layer (A) formed on one surface side of, and an easily adhering pressure-sensitive adhesive tape including a base material layer (B) having one surf ace easily adhering to the pressure-sensitive adhesive layer (A) and a pressure-sensitive adhesive layer (B) formed on the other surface side of the base material layer (B), the antifouling pressure-sensitive adhesive tape being bonded onto the easily adhering pressure-sensitive adhesive tape so that lengthwise directions of the antifouling pressure-sensitive adhesive tape and the easily adhering pressure-sensitive adhesive tape are non-parallel with each other.

According to another embodiment of the present invention, the structure includes a surface to be prevented from being fouled, in which at least part of the surface has bonded thereonto two or more antifouling pressure-sensitive adhesive tapes each having a base material layer (A) and a pressure-sensitive adhesive layer (A) formed on one surface side of the base material layer (A), and at least one easily adhering pressure-sensitive adhesive tape including abase material layer (B) having one surface easily adhering to the pressure-sensitive adhesive layer (A) and a pressure-sensitive adhesive layer (B) formed on the other surface side thereof so that the antifouling pressure-sensitive adhesive tapes are prevented from overlapping each other and a junction between the antifouling pressure-sensitive adhesive tapes is on a surface of the base material layer (B) of the easily adhering pressure-sensitive adhesive tape.

Inapreferredembodiment, the structure includes an underwater structure.

### Advantageous Effects of Invention

According to the method of preventing fouling of a structure of the present invention, the problem of the falling of the antifouling pressure-sensitive adhesive tapes can be solved because the progress of the peeling of the antifouling pressure-sensitive adhesive tapes is suppressed by using the easily adhering pressure-sensitive adhesive tape. In addition, the problems of the peeling of the antifouling pressure-sensitive adhesive tapes from the junction, the adhesion of the aquatic organism in the gap between the antifouling pressure-sensitive adhesive tapes, and the poor workability with respect to a bent portion can be solved.

### Brief Description of Drawings

FIG. 1 is a schematic view illustrating a method of preventing fouling of the present invention.
FIGS. **2(a)** and **2(b)** are each a schematic sectional view of an antifouling pressure-sensitive adhesive tape that can be used in the method of preventing fouling of the present invention.
FIG. 3 is a schematic sectional view of an easily adhering pressure-sensitive adhesive tape that may be used in the method of preventing fouling of the present invention.
FIGS. **4(a)** and **4(b)** are each a view illustrating a method of bonding an easily adhering pressure-sensitive adhesive tape in a step 2a-1.
FIG. **5** is a view illustrating the method of bonding the easily adhering pressure-sensitive adhesive tape in the step 2a-1.
FIG. **6** is a view illustrating the method of bonding the easily adhering pressure-sensitive adhesive tape in the step 2a-1.
FIG. **7** is a view illustrating the method of bonding an easily adhering pressure-sensitive adhesive tape in the step 2a-1.
FIGS. **8(a)** and **8(b)** are each a view illustrating the method of bonding an easily adhering pressure-sensitive adhesive tape in the step 2a-1.
FIGS. **9(a)** and **9(b)** are each a view illustrating a method of bonding an antifouling pressure-sensitive adhesive tape in a step 2a-2.
FIG. **10** is a schematic view illustrating a step 2b of the method of preventing fouling of the present invention.
FIGS. **11 (a)** and **11 (b)** are each a schematic view illustrating a preferred arrangement state of the antifouling pressure-sensitive adhesive tapes and the easily adhering pressure-sensitive adhesive tape on a surface having a bent portion.
FIG. **12** is a schematic view illustrating a preferred arrangement state of the antifouling pressure-sensitive adhesive tapes and the easily adhering pressure-sensitive adhesive tape on the surface having the bent portion.
FIG. **13** is a schematic view illustrating one preferred embodiment of a step 2b.
FIGS. **14 (a)** to **14 (c)** are each a schematic view illustrating another preferred embodiment of the step 2b.
FIGS. **15 (a)** and **15 (b)** are each a schematic view illustrating another preferred embodiment of the step 2b.
FIGS. **16 (a)** to **16(c)** are each a schematic view illustrating another preferred embodiment of the step 2b.

### Description of Embodiments

### [A. Method of preventing fouling of structure]

A method of preventing the fouling of a structure of the present invention includes the below-indicated steps: step 1; and step 2a-1 and step 2a-2, or step 2b. That is, the method of preventing fouling of a structure of the present invention may be an embodiment including the step 1, and the step 2a-1 and the step 2a-2 (hereinafter referred to as "first embodiment") or an embodiment including the step 1 and the step 2b (hereinafter referred to as "second embodiment") :
(step 1) preparing an antifouling pressure-sensitive adhesive tape including abase material layer (A) and a pressure-sensitive adhesive layer (A) formed on one surface side thereof, and an easily adhering pressure-sensitive adhesive tape including a base material layer (B) having one surface easily adhering to the pressure-sensitive adhesive layer (A) and a pressure-sensitive adhesive layer (B) formed on the other surface side thereof; and
(step 2a-1) bonding the easily adhering pressure-sensitive adhesive tape onto a surface of a structure to be prevented from being fouled, and
(step 2a-2) bonding the antifouling pressure-sensitive adhesive tape onto the bonded easily adhering pressure-sensitive adhesive tape so that lengthwise directions thereof are non-parallel with each other, or
(step 2b) bonding the two or more antifouling pressure-sensitive adhesive tapes and the at least one easily adhering pressure-sensitive adhesive tape onto a surface of a structure to be prevented from being fouled so that the antifouling pressure-sensitive adhesive tapes are prevented from overlapping each other and a junction therebetween is on a surface of the base material layer (B) of the easily adhering pressure-sensitive adhesive tape.

Hereinafter, the method of preventing fouling of a structure according to each of the first embodiment and second embodiment of the present invention is described in detail.

### [First embodiment]

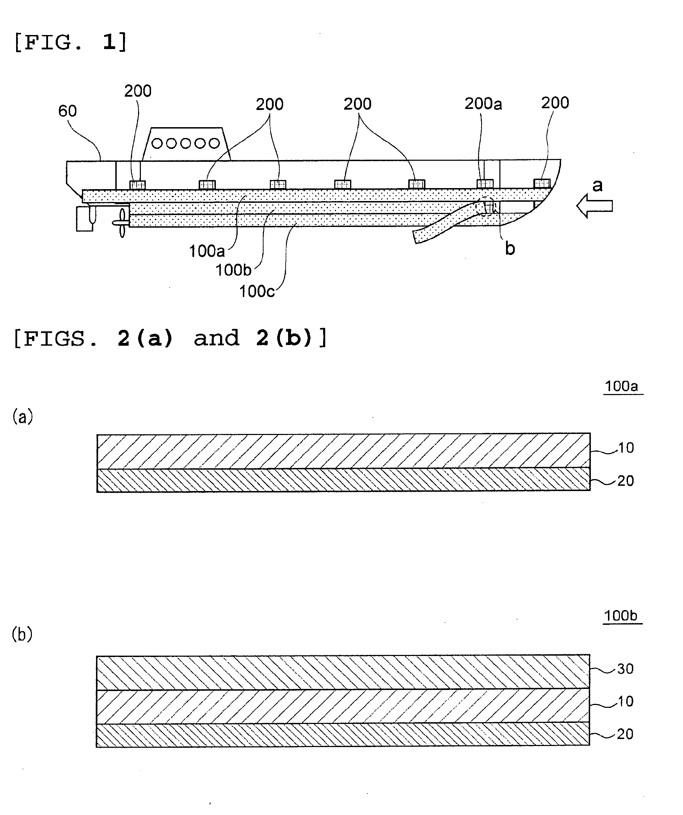

The method of preventing fouling of a structure according to the first embodiment of the present invention includes the following steps:
(step 1) preparing an antifouling pressure-sensitive adhesive tape including abase material layer (A) and a pressure-sensitive adhesive layer (A) formed on one surface side thereof, and an easily adhering pressure-sensitive adhesive tape including a base material layer (B) having one surface easily adhering to the pressure-sensitive adhesive layer (A) and apressure-sensitive adhesive layer (B) formed on the other surface side thereof; and
(step 2a-1) bonding the easily adhering pressure-sensitive adhesive tape onto a surface of a structure to be prevented from being fouled, and
(step 2a-2) bonding the antifouling pressure-sensitive adhesive tape onto the bonded easily adhering pressure-sensitive adhesive tape so that lengthwise directions thereof are non-parallel with each other. According to such method of preventing fouling, the falling of the antifouling pressure-sensitive adhesive tape can be prevented while the adhesive strength of each of the pressure-sensitive adhesive layer (A) of the antifouling pressure-sensitive adhesive tape and the pressure-sensitive adhesive layer (B) of the easily adhering pressure-sensitive adhesive tape to the surface of the structure is suppressed to the extent that each pressure-sensitive adhesive tape can be peeled and removed. Specifically, for example, when an antifouling pressure-sensitive adhesive tape **100b** receives a stress **a** due to a fluid resistance such as a water flow or an air flow to peel from the surface of the structure **60** as illustrated in FIG. **1****,** the peeling can be prevented from progressing beyond an adhesion point **b** of the antifouling pressure-sensitive adhesive tape **100b** and an easily adhering pressure-sensitive adhesive tape **200a** because the antifouling pressure-sensitive adhesive tape and the easily adhering pressure-sensitive adhesive tape strongly adhere to each other. In addition, even when the antifouling pressure-sensitive adhesive tape **100b** is going to peel together with the easily adhering pressure-sensitive adhesive tape **200a** at the adhesion point **b,** the progress of the peeling can be suppressed by a surrounding unpeeled portion because of the following reason: the antifouling pressure-sensitive adhesive tape and the easily adhering pressure-sensitive adhesive tape are bonded so that their lengthwise directions are non-parallel with each other, and hence the tapes differ from each other in direction in which peeling progresses. It should be noted that in the first embodiment, the term "parallel" is a meaning comprehending 0°±3.0° and the term "non-parallel" is a meaning excluding 0°±3.0°.

### [Step 1]

In the step 1, the antifouling pressure-sensitive adhesive tape including the base material layer (A) and the pressure-sensitive adhesive layer (A) formed on one surface side thereof, and the easily adhering pressure-sensitive adhesive tape including the base material layer (B) having one surface easily adhering to the pressure-sensitive adhesive layer (A) and the pressure-sensitive adhesive layer (B) formed on the other surface side thereof are prepared. It should be noted that the step 1 is a step common to the first embodiment and the second embodiment, and substantially the same description is applicable to both embodiments.

### <<Antifouling pressure-sensitive adhesive tape>>

FIG. **2(a)** is a schematic sectional view of an antifouling pressure-sensitive adhesive tape that can be used in a preferred embodiment of the present invention. An antifouling pressure-sensitive adhesive tape **100a** includes a base material layer (A) 10 and a pressure-sensitive adhesive layer (A) **20** formed on one surface side thereof. FIG. **2 (b)** is a schematic sectional view of an antifouling pressure-sensitive adhesive tape that can be used in another preferred embodiment of the present invention. The antifouling pressure-sensitive adhesive tape **100b** further includes an antifouling layer **30** on the surface side of the base material layer (A) **10** on which the pressure-sensitive adhesive layer (A) **20** is not formed. In addition, the tape may further include any appropriate other layer. A release film (not shown) may be provided on the surface of the antifouling layer **30** of the antifouling pressure-sensitive adhesive tape and/or the surface of the pressure-sensitive adhesive layer (A) **20** of the tape.

The thickness of the antifouling pressure-sensitive adhesive tape is set to any appropriate thickness to the extent that the effects of the present invention are not impaired by the thickness of each layer in the tape. The thickness of the antifouling pressure-sensitive adhesive tape is preferably from 50 µm to 5,000 µm.

Any appropriate shape may be adopted as the shape of the antifouling pressure-sensitive adhesive tape depending on applications and the like. For example, the antifouling pressure-sensitive adhesive tape may be a belt-shaped elongated substance, or may be of a strip shape, a small piece shape, or the like. In addition, any appropriate length may be adopted as each of the lengths of the long sides and short sides of the antifouling pressure-sensitive adhesive tape depending on applications, a use environment, and the like.

Any appropriate base material layer may be adopted as the base material layer (A) to the extent that the effects of the present invention are not impaired. A material for such base material layer (A) is preferably excellent in water resistance, strength, flexibility, and breaking property. Examples of such material for the base material layer (A) include a polyurethane resin, a polyurethane acrylic resin, a rubber-based resin, a vinyl chloride resin, a polyester resin, a silicone resin, an elastomer, a fluororesin, a polyamide resin, a polyolefin resin (such as polyethylene or polypropylene), and a polystyrene resin. The number of kinds of such materials for the base material layer (A) may be only one, or may be two or more.

The elongation of the base material layer (A) is preferably 100% or more, more preferably 120% or more, still more preferably 150% or more. When the elongation of the base material layer (A) is 100% or more, the antifouling pressure-sensitive adhesive tape can satisfactorily follow the shapes of various structures. As a result, the antifouling pressure-sensitive adhesive tape can be satisfactorily bonded onto a flat surface, and also can be satisfactorily bonded onto a bent portion (such as a curved surface portion, 90° -angle portion, or acute angle portion present on the surface of a ship hull). When the elongation of the base material layer (A) is less than 100%, the tape may hardly sufficiently follow the shapes of the various structures, and hence a wrinkle or a non-adhesion portion of a pressure-sensitive adhesive mayoccur, whichmaybe responsible for an external appearance failure or an adhesion failure. An upper limit for the elongation of the base material layer (A) ispreferably2,000%orlessfromtheviewpoint of the strength of the base material layer (A).

The rupture point stress of the base material layer (A) is preferably 10 MPa or more, more preferably 12 MPa or more, still more preferably 15 MPa or more. When the rupture point stress of the base material layer (A) is less than 10 MPa, the base material layer (A) may be frequently cut upon peeling of the antifouling pressure-sensitive adhesive tape that has already been used from a structure, and hence working efficiency may remarkably deteriorate. An upper limit for the rupture point stress of the base material layer (A) is preferably 200 MPa or less from the viewpoint of the handling property of the base material layer (A).

The elongation and rupture point stress of the base material layer (A) can be measured in conformity with JIS 7161, JIS 7162, and JIS 7172.

The modulus of elasticity of the base material layer (A) is preferably 4,000 MPa or less, more preferably 1,000 MPa or less, still more preferably 100 MPa or less, particularly preferably 50 MPa or less. When the modulus of elasticity of the base material layer (A) is 4,000 MPa or less, the antifouling pressure-sensitive adhesive tape can satisfactorily follow the shapes of various structures and hence its applicability improves. A lower limit for the modulus of elasticity of the base material layer (A) is preferably 0.1 MPa or more from the viewpoint of the handling property of the base material layer (A).

The base material layer (A) may contain any appropriate additive to the extent that the effects of the present invention are not impaired. Examples of such additive include an olef in-based resin, a silicone-based polymer, a liquid acrylic copolymer, a tackifier, an antioxidant, a hindered amine-based light stabilizer, a UV absorbing agent, an antioxidizing agent, an antistatic agent, polyethylene imine, a fatty acid amide, a fatty acid ester, a phosphoric acid ester, a lubricant, a surfactant, a filler, and a pigment (such as calcium oxide, magnesium oxide, silica, zinc oxide, titanium oxide, or carbon black).

The base material layer (A) preferably contains a UV absorbing agent. When the base material layer (A) contains the UV absorbing agent, the weatherability of the antifouling pressure-sensitive adhesive tape improves. When the base material layer (A) does not contain any UV absorbing agent, the base material is liable to deteriorate owing to sunlight in outdoor use and hence it may become difficult to maintain the original base material strength. In addition, when the base material deteriorates, the base material layer (A) may be frequently cut upon peeling of the antifouling pressure-sensitive adhesive tape that has already been used from a structure, and hence working efficiency may remarkably deteriorate.

Any appropriate thickness maybe adopted as the thickness of the base material layer (A) depending on applications, a use environment, and the like. The thickness of the base material layer (A) is preferably from 20 µm to 500 µm. When the thickness of the base material layer (A) is less than 20 µm, the layer may not be practical because its handling property deteriorates and hence the layer cannot serve as a base material. When the thickness of the base material layer (A) is more than 500 µm, there is a risk that the tape cannot sufficiently follow the shape of a structure, unevenness at the junction portion of the tapes enlarges, and dirt is liable to adhere to the structure.

When the antifouling layer is formed on the base material layer (A), a primer may be applied onto the base material layer (A) in advance or a silane coupling agent may be added to the layer in advance in order that its adhesiveness with the antifouling layer may be improved. When the antifouling layer contains a silicone resin, its adhesiveness with the base material layer (A) may be low owing to low surface energy as a characteristic of the silicone resin. When the adhesiveness between the antifouling layer and the base material layer (A) is low, the antifouling layer that exhibits an antifouling effect peels from the base material layer (A) owing to impact or physical damage during use, and hence it may be impossible to maintain its original antifouling effect. Accordingly, the primer can be applied onto the surface of the base material layer (A) in advance to improve the adhesiveness with the antifouling layer, or a silanol group or alkoxysilane group that reacts with the silicone resin can be introduced into the base material layer (A) by the silane coupling agent and subjected to a condensation reaction with a reactive group on the base material layer (A) at the time of the application of a condensation-type silicone resin to improve the adhesiveness.

The number of kinds of the silane coupling agents may be only one, or may be two or more. As a specific silane coupling agent that is commercially available, there are given, for example, KBM5103, KBM1003, KBM903, KBM403, and KBM802 manufactured by Shin-Etsu Chemical Co., Ltd.

When the base material layer (A) contains the silane coupling agent, the content of the silane coupling agent in the base material layer (A) is preferably from 0.01 wt% to 10 wt%. When the content of the silane coupling agent in the base material layer (A) exceeds 10 wt%, the silane coupling agent may serve as a cross-linking point to make the base material layer hard. When the content of the silane coupling agent in the base material layer (A) is less than 0.01 wt%, sufficient adhesiveness may not be expressed between the base material layer (A) and the antifouling layer.

The surface of the base material layer (A) on the side on which the pressure-sensitive adhesive layer (A) is formed may be subjected to easy-adhesion treatment. Subjecting the surface to the easy-adhesion treatment can suppress an adhesive residue upon peeling and removal. The easy-adhesion treatment is, for example, the same treatment as treatment to be performed on the surface of the base material layer (B) of the easily adhering pressure-sensitive adhesive tape (details are described later).

Any appropriate pressure-sensitive adhesive layer may be adopted as the pressure-sensitive adhesive layer (A) to the extent that the effects of the present invention are not impaired. Examples of a material for such pressure-sensitive adhesive layer (A) include an acrylic resin-based pressure-sensitive adhesive, an epoxy resin-based pressure-sensitive adhesive, an amino resin-based pressure-sensitive adhesive, a vinyl resin (e.g., vinyl acetate-based polymer)-based pressure-sensitive adhesive, a curable acrylic resin-based pressure-sensitive adhesive, and a silicone resin-based pressure-sensitive adhesive. The number of kinds of the materials for the pressure-sensitive adhesive layer (A) may be only one, or may be two or more.

The 180° peeling adhesive strength of the pressure-sensitive adhesive layer (A) at 23°C and a tension speed of 300 mm/min is preferably 30 N/20 mm or less, more preferably 20 N/20 mm or less, still more preferably 15 N/20 mm or less. When the 180° peeling adhesive strength of the pressure-sensitive adhesive layer (A) at 23°C and a tension speed of 300 mm/min exceeds 30 N/20 mm, it may become difficult to peel the antifouling pressure-sensitive adhesive tape that has already been used from a structure, and hence the working efficiency may remarkably deteriorate. A lower limit for the 180° peeling adhesive strength of the pressure-sensitive adhesive layer (A) at 23°C and a tension speed of 300 mm/min is preferably 5 N/20 mm or more. Such adhesive strength can cause the layer to adhere to the surface of the base material layer (B) of the easily adhering pressure-sensitive adhesive tape to be described later in an extremely strong manner. Accordingly, even when the tape peels from the surface of the structure and receives a fluid resistance to flutter, the peeling can be prevented from progressing beyond the adhesion point with the easily adhering pressure-sensitive adhesive tape.

The 180° peeling adhesive strength of the pressure-sensitive adhesive layer (A) may be measured, for example, as described below. That is, the pressure-sensitive adhesive layer (A) is laminated on a base material to produce a pressure-sensitive adhesive sheet and the sheet is cut into a test piece having a size measuring 80 mm by 20 mm. A plastic FRP plate reinforced by loading glass cloth into an epoxy resin measuring 30 mm wide by 100 mm long by 2 mm thick is used as an adherend. The test piece is bonded onto the adherend by reciprocating a 2-kg roller once and the resultant is left to stand at 23°C for 30 minutes. After that, its initial 180° peeling adhesive strength is measured at a tension speed of 300 mm/min.

When the pressure-sensitive adhesive layer (A) is brought into contact with seawater, the compressive modulus of elasticity of a portion in the pressure-sensitive adhesive layer (A) brought into contact with the seawater is preferably 1.1 times or more, more preferably 1.2 times or more, still more preferably 1.5 times or more as large as a compressive modulus of elasticity in the pressure-sensitive adhesive layer (A) before the contact with the seawater. When the compressive modulus of elasticity of the portion in the pressure-sensitive adhesive layer (A) brought into contact with the seawater upon bringing of the pressure-sensitive adhesive layer (A) into contact with the seawater is 1.1 times or more as large as the compressive modulus of elasticity in the pressure-sensitive adhesive layer (A) before the contact with the seawater, the layer can express its good adhesion even in water. An upper limit for the ratio of the compressive modulus of elasticity of the portion in the pressure-sensitive adhesive layer (A) brought into contact with the seawater upon bringing of the pressure-sensitive adhesive layer (A) into contact with the seawater to the compressive modulus of elasticity in the pressure-sensitive adhesive layer (A) before the contact with the seawater is preferably 100 times or less from the viewpoint of its handling property.

Any appropriate thickness may be adopted as the thickness of the pressure-sensitive adhesive layer (A) depending on applications, a use environment, and the like. The thickness of the pressure-sensitive adhesive layer (A) is preferably 10 µm or more. When the thickness of the pressure-sensitive adhesive layer (A) is less than 10 µm, there is a risk that the layer cannot sufficiently follow the shape of a structure, its adhesion area may reduce, and the layer cannot express sufficient adhesion. An upper limit for the thickness of the pressure-sensitive adhesive layer (A) is preferably 100 µm or less from the viewpoint of the handling property.

Any appropriate antifouling layer may be adopted as the antifouling layer to the extent the effects of the present invention are not impaired. A material for forming such antifouling layer includes, for example, a resin having a small surface energy such as a fluorine-based resin, a silicone-based resin, a melamine-based resin, or an acrylic resin.

The antifouling layer preferably further contains an antifouling agent. The number of kinds of the antifouling agents may be only one, or may be two or more. When the antifouling layer contains the antifouling agent, its high antifouling effect can be maintained for a long time period because the agent migrates to the surface of the resin as a matrix and covers the surface.

The content of the antifouling agent in the antifouling layer with respect to the resin is preferably 2 wt% or more, more preferably from 2 wt% to 200 wt%, still more preferably from 3 wt% to 150 wt%, particularly preferably from 4 wt% to 120 wt%, most preferably from 5 wt% to 100 wt%. When the content of the antifouling agent with respect to the resin is less than 2 wt%, the antifouling layer may be unable to sufficiently express its antifouling effect. When the content of the antifouling agent with respect to a base resin exceeds 200 wt%, the external appearance of a final molded article or coating film may be unsatisfactory, and the antifouling layer may be reduced in strength to be unable to maintain its antifouling property.

Any appropriate antifouling agent may be adopted as the antifouling agent to the extent that the effects are the present invention are not impaired. Examples of such antifouling agent include a silicone oil, a liquid paraffin, a surfactant, a wax, petrolatum, animal fats, and a fatty acid. The antifouling agent that may be used in the present invention is preferably at least one kind selected from the silicone oil, the liquid paraffin, and the surfactant.

Examples of the silicone oil include: KF96L, KF96, KF69, KF99, KF50, KF54, KF410, KF412, KF414, and FL manufactured by Shin-Etsu Chemical Co., Ltd; and BY16-846, SF8416, SH203, SH230, SF8419, FS1265, SH510, SH550, SH710, FZ-2110, and FZ-2203 manufactured by Dow Corning Toray Co., Ltd.

Examples of the surfactant include an anionic surfactant, a cationic surfactant, and a nonionic surfactant.

A diatom adhesion-preventing agent, an agricultural chemical, a drug (such as medetomidine), an enzyme activity inhibitor (such as an alkylphenol or an alkylresorcinol), or an organism repellent may be used as the antifouling agent. The use of any such antifouling agent additionally improves a preventing effect on the adhesion of an aquatic organism such as a diatom or a barnacle.

The antifouling layer may contain any appropriate other additive to the extent that the effects of the present invention are not impaired.

In addition, a commercially available paint composition may be used as the material for forming the antifouling layer. Examples of the commercially available paint composition include compositions available under the trade name "PELLER CLEAN" and "BIOCLEAN" manufactured by CHUGOKU MARINE PAINTS, LTD. and a composition available under the trade name "Everclean" manufactured by NKM Coatings Co., Ltd.

Any appropriate thickness may be adopted as the thickness of the antifouling layer depending on applications, a use environment, and the like. The thickness of the antifouling layer is preferably from 5µm to 500 µm. When the thickness of the antifouling layer is less than 5 µm, the layer may not be practical because the time period for which its antifouling effect effectively works shortens. When the thickness of the antifouling layer is more than 500 µm, the antifouling pressure-sensitive adhesive tape becomes thick and increases in weight. Accordingly, there is a risk that its handling property deteriorates, unevenness at a junction portion of the tape may enlarge, and dirt is liable to adhere.

The antifouling pressure-sensitive adhesive tape may be produced by any appropriate method. Examples of such method include: a method involving bonding the separately prepared base material layer (A) and pressure-sensitive adhesive layer (A) onto each other; a method involving applying a pressure-sensitive adhesive layer formation material onto one surface of the base material layer (A) to form the pressure-sensitive adhesive layer (A) ; a method involving bonding the separately prepared base material layer (A) and pressure-sensitive adhesive layer (A) onto each other , and then applying an antifouling layer formation material onto the base material layer (A) to form the antifouling layer; a method involving applying the pressure-sensitive adhesive layer formation material onto one surface of the base material layer (A) to form the pressure-sensitive adhesive layer (A), and applying the antifouling layer formation material onto the other surface of the base material layer (A) to form the antifouling layer; and a method involving coextruding a base material layer formation material and the pressure-sensitive adhesive layer formation material to form a laminate of the base material layer (A) and the pressure-sensitive adhesive layer (A), and then applying the antifouling layer formation material onto the base material layer (A) to form the antifouling layer.

A method of applying the antifouling layer formation material onto the base material layer is, for example, a spray, brush application, a roller, a curtain flow, a roll, or dipping. The antifouling layer can be formed by applying the antifouling layer formation material onto the base material layer according to any such method and drying the material at, for example, a temperature of from room temperature to 250°C (preferably a temperature of from room temperature to 180°C).

### «Easily adhering pressure-sensitive adhesive tape»

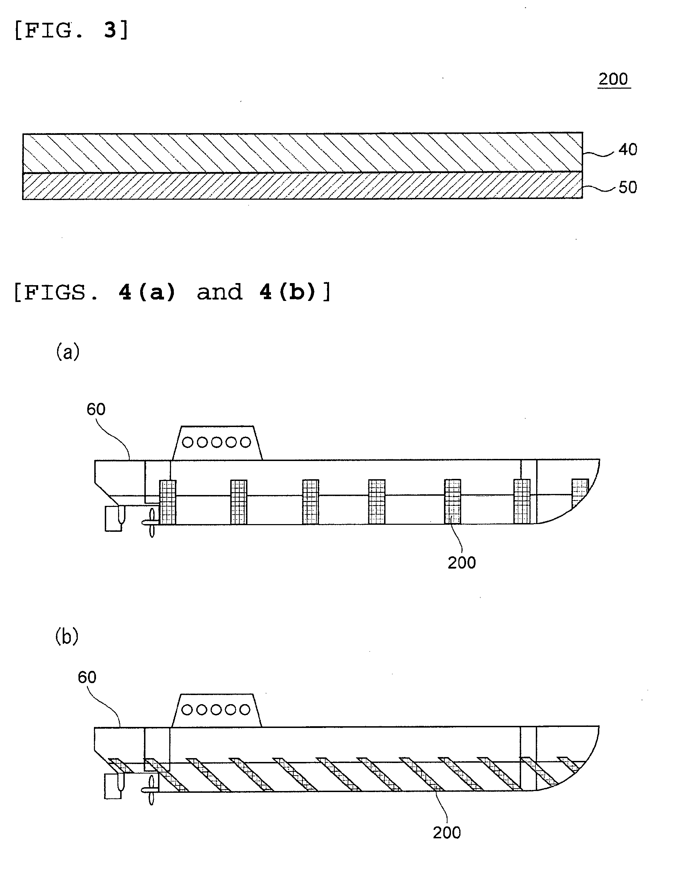

FIG. 3 is a schematic sectional view of an easily adhering pressure-sensitive adhesive tape that may be used in the present invention. An easily adhering pressure-sensitive adhesive tape **200** includes a base material layer (B) **40** and a pressure-sensitive adhesive layer (B) **50** formed on one surface side thereof. A release film (not shown) may be provided on the surface of the base material layer (B) **40** of the easily adhering pressure-sensitive adhesive tape and/or the surface of the pressure-sensitive adhesive layer (B) 50 of the tape.

The thickness of the easily adheringpressure-sensitive adhesive tape is set to any appropriate thickness to the extent that the effects of the present invention are not impaired by the thickness of each layer in the tape. The thickness of the easily adhering pressure-sensitive adhesive tape is preferably from 50 µm to 5,000 µm.

Any appropriate shape may be adopted as the shape of the easily adhering pressure-sensitive adhesive tape depending on applications and the like. For example, the easily adhering pressure-sensitive adhesive tape may be a belt-shaped elongated substance, or may be of a strip shape, a small piece shape, or the like. In addition, any appropriate length may be adopted as each of the lengths of the long sides and short sides of the easily adhering pressure-sensitive adhesive tape depending on applications, a use environment, and the like. The easily adhering pressure-sensitive adhesive tape may be a tape narrower than the antifouling pressure-sensitive adhesive tape because the tape has only to be arranged below the antifouling pressure-sensitive adhesive tape (below a junction between the antifouling pressure-sensitive adhesive tapes in the method of preventing fouling according to the second embodiment to be described later) and is not required to cover a wide area. In one embodiment, the length of each short side of the easily adhering pressure-sensitive adhesive tape may fall within the range of, for example, from 0.5 cm to 50 cm, preferably from 1 cm to 30 cm.

Any appropriate base material layer may be adopted as the base material layer (B) to the extent that the effects of the present invention are not impaired. A material for such base material layer (A) is preferably excellent in water resistance, strength, flexibility, and breaking property. Examples of such material for the base material layer (B) include a polyurethane resin, a polyurethane acrylic resin, a rubber-based resin, a vinyl chloride resin, a polyester resin, a silicone resin, an elastomer, a fluororesin, a polyamide resin, a polyolefin resin (such as polyethylene or polypropylene), a polystyrene resin, a polyimide resin, a polyethylene terephthalate resin, an aramid (paper), a glass cloth, and a nylon cloth. The number of kinds of such materials for the base material layer (B) may be only one, or may be two or more.

The rupture point stress of the base material layer (B) is preferably 10 MPa or more, more preferably 12 MPa or more, still more preferably 15 MPa or more. When the base material layer (B) has a rupture point stress comparable to or more than that of the base material layer (A), the breakage (such as rupture) of the base material layer (B) due to a stress which the peeled antifouling pressure-sensitive adhesive tape receives from a fluid resistance can be suppressed. As a result, the progress of the peeling can be suppressed. In addition, in the method of preventing fouling according to the second embodiment, the breakage (such as rupture) of the base material layer (B) at the junction between the antifouling pressure-sensitive adhesive tapes can be suppressed. As a result, a strength at the junction portion can be made comparable to or more than the strength of each antifouling pressure-sensitive adhesive tape. An upper limit for the rupture point stress of the base material layer (B) is preferably 200 MPa or less from the viewpoint of the handling property of the base material layer (B) .

The rupture point stress of the base material layer (B) can be measured in conformity with JIS 7161, JIS 7162, and JIS 7172.

The surface of the base material layer (B) on the side on which the pressure-sensitive adhesive layer (B) is not formed easily adheres to the pressure-sensitive adhesive layer (A) of the antifouling pressure-sensitive adhesive tape (hereinafter, the surface is sometimes referred to as "easy-adhesion surface"). Specifically, an adhesive strength between the pressure-sensitive adhesive layer (A) and the easy-adhesion surface is larger than an adhesive strength between the pressure-sensitive adhesive layer (A) and the surface of the structure to be prevented from being fouled. Thus, the antifouling pressure-sensitive adhesive tape can adhere onto the easily adhering pressure-sensitive adhesive tape in an extremely strong manner. As a result, even when the antifouling pressure-sensitive adhesive tape peels and the peeled portion receives a fluid resistance to flutter, the progress of the peeling can be suitably suppressed without the reinforcement of the adhesive strength between the surface of the structure and the antifouling pressure-sensitive adhesive tape to such a level that it is difficult to peel and remove the tape. In addition, in the method of preventing fouling according to the second embodiment, the peeling of the antifouling pressure-sensitive adhesive tapes from their junction can be suitably prevented without the reinforcement of the adhesive strength between the surface of the structure and each antifouling pressure-sensitive adhesive tape to such a level that it is difficult to peel and remove the tape. The adhesive strength of the antifouling pressure-sensitive adhesive tape to the easy-adhesion surface of the easily adhering pressure-sensitive adhesive tape (180° peeling adhesive strength at 23°C and a tension speed of 300 mm/min) is preferably 15 N/20 mm or more, more preferably 20 N/20 mm or more. The adhesive strength may be measured under the same conditions as those for the 180° peeling adhesive strength of the pressure-sensitive adhesive layer (A). It should be noted that when the antifouling pressure-sensitive adhesive tape and the easily adhering pressure-sensitive adhesive tape are peeled and removed, the easy-adhesion surface and the pressure-sensitive adhesive layer (A) may adhere to each other to integrate both the tapes because these pressure-sensitive adhesive tapes can be collectively peeled from the surface of the structure.

The surface of the base material layer (B) on the side on which the pressure-sensitive adhesive layer (B) is not formed maybe subjected to easy-adhesion treatment for allowing the surface to easily adhere to the pressure-sensitive adhesive layer (A) as required. Any appropriate chemical surface treatment or physical surface treatment, or a combination thereof may be employed as the easy-adhesion treatment. Specific examples thereof include: vapor deposition of a metal, an oxide, an inorganic substance, or the like; sputtering with oxygen, nitrogen, argon, or the like; plasma treatment; surface treatment with an acid such as hydrochloric acid, sulfuric acid, or nitric acid, an alkali such as sodium hydroxide or potassium hydroxide, or an organic solvent; UV/ozone irradiation; corona discharge treatment; flame treatment; application of a coupling agent; surface roughening treatment through mold shape transfer, sandblasting, or stretch bending; and surface modification treatment through the addition of a filler, a coupling agent, or the like to a base material formation material.

The surface of the base material layer (B) on the side on which the pressure-sensitive adhesive layer (B) is formed may also be subjected to easy-adhesion treatment for the purpose of suppressing an adhesive residue upon peeling and removal. In this case, UV/ozone irradiation, surface treatment with an alkali (saponification), or the addition of a filler, a coupling agent, or the like to a base material formation material is preferred. This is because both surfaces of the base material layer (B) can be simultaneously treated.

Any appropriate thickness maybe adopted as the thickness of the base material layer (B) depending on applications, a use environment, and the like. The thickness of the base material layer (B) is preferably from 20 µm to 500 µm. When the thickness of the base material layer (B) is less than 20 µm, the layer may not be practical because its handling property may deteriorate and hence the layer cannot serve as a base material. When the thickness of the base material layer (B) is more than 500 µm, the layer may be unable to sufficiently follow the shape of a structure.

Any appropriate pressure-sensitive adhesive layer may be adopted as the pressure-sensitive adhesive layer (B) to the extent that the effects of the present invention are not impaired. Such pressure-sensitive adhesive layer (B) is, for example, the same pressure-sensitive adhesive layer as the pressure-sensitive adhesive layer (A).

The easily adhering pressure-sensitive adhesive tape may be produced by any appropriate method. Examples of such method include: a method involving bonding the separately prepared base material layer (B) and pressure-sensitive adhesive layer (B); a method involving applying a formation material for the pressure-sensitive adhesive layer (B) to one surface of the base material layer (B) to form the pressure-sensitive adhesive layer (B); and a method involving coextruding a formation material for the base material layer (B) and the formation material for the pressure-sensitive adhesive layer (B). In each of those methods, the base material layer (B) may be subjected to easy-adhesion treatment before its lamination with the pressure-sensitive adhesive layer (B), or may be subjected to the easy-adhesion treatment after the lamination.

### [Step 2a-1]

In the step 2a-1, the easily adhering pressure-sensitive adhesive tape is bonded onto the surface of the structure to be prevented from being fouled. The number of the easily adhering pressure-sensitive adhesive tapes to be bonded, which is not limited, is preferably two or more. When the two or more easily adhering pressure-sensitive adhesive tapes are bonded, the number of the adhesion points of the antifouling pressure-sensitive adhesive tape with the easily adhering pressure-sensitive adhesive tapes increases, and hence the progress of the peeling can be suppressed while being subdivided in a stepwise manner.

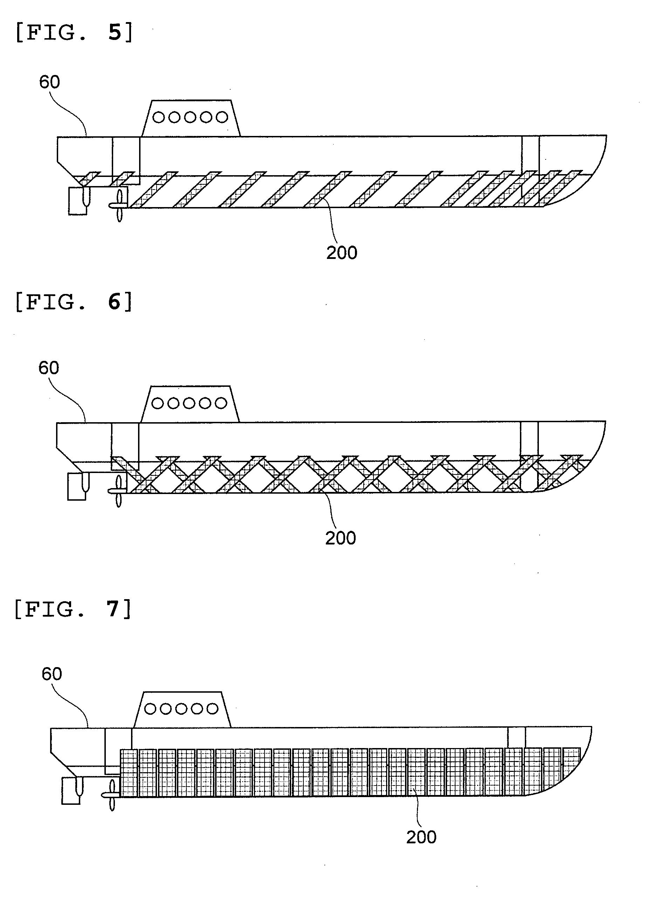

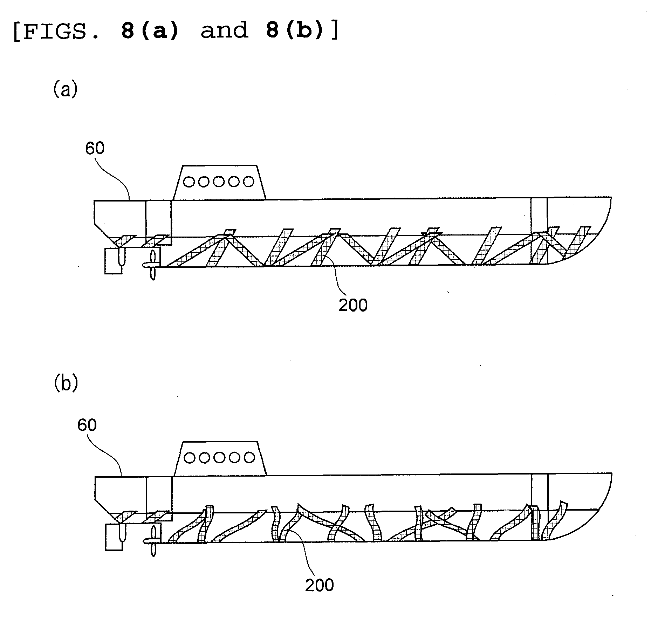

When the two or more easily adhering pressure-sensitive adhesive tapes are bonded, the direction in, and interval at, which the respective pressure-sensitive adhesive tapes are bonded are not limited. For example, two or more easily adhering pressure-sensitive adhesive tapes 200 may be bonded onto the surface of the structure 60 (a ship in each illustrated example) at an equal interval in a parallel manner as illustrated in each of FIGS. **4(a)** and **4(b)****,** may be bonded at unequal intervals in a parallel manner as illustrated in FIG. 5, may be bonded in a lattice manner as illustrated in FIG. 6, may be bonded onto the entire surface as illustrated in FIG. 7, or may be bonded so that both angles formed by their respective lengthwise directions and their intervals are random as illustrated in each of FIGS. **8(a)** and **8(b)**. In addition, the tapes may be bonded to intersect each other longitudinally and laterally like a network shape, a rib shape, or a cage shape, or maybe bonded so that the end portions of adjacent pressure-sensitive adhesive tapes overlap each other (not shown). The easily adhering pressure-sensitive adhesive tapes are bonded at an interval of preferably from 0.1 m to 5 m, more preferably from 0.3 m to 3 m. With such interval, the progress of the peeling of the antifouling pressure-sensitive adhesive tape can be economically prevented while being subdivided in a stepwise manner. It should be noted that in the case where each pressure-sensitive adhesive tape is bonded in a nonlinear manner (e.g., the case illustrated in FIG. **8(b)****)**, the direction in which a straight line connecting the middle points of its short sides extends is defined as a lengthwise direction.

The structure having the surface to be prevented from being fouled may be any appropriate structure as long as the structure has the surface to be prevented from being fouled. Examples of the structure include underwater structures such as a ship, a buoy, a harbor facility, a maritime oil field facility, a cooling water supply line for a power plant, and a cooling water supply line for a factory, a propeller for wind power generation, a bridge pier, a building,an automobile,heavy machinery,and aircrafts. Of those, an underwater structure is preferred. In addition, an antifouling paint or an anticorrosive paint may be applied onto the surface of the structure to be prevented from being fouled.

### [Step 2a-2]

In the step 2a-2, the antifouling pressure-sensitive adhesive tape is bonded onto the easily adhering pressure-sensitive adhesive tape bonded in the step 2a-1 so that their lengthwise directions are non-parallel with each other. The bonding of the antifouling pressure-sensitive adhesive tape onto the easily adhering pressure-sensitive adhesive tape can prevent the antifouling pressure-sensitive adhesive tape **100b** from peeling beyond the adhesion point **b** with the easily adhering pressure-sensitive adhesive tape **200a** because of strong adhesion between the antifouling pressure-sensitive adhesive tape **100b** and the easily adhering pressure-sensitive adhesive tape **200a,** for example, when the antifouling pressure-sensitive adhesive tape **100b** receives the stress **a** due to a fluid resistance such as a water flow or an air flow to peel from the surface of the structure **60** as illustrated in FIG. **1****.** In addition, when the stress due to the fluid resistance on the peeled portion of the antifouling pressure-sensitive adhesive tape is large, there is a risk that the antifoulingpressure-sensitive adhesive tape peels together with the easily adhering pressure-sensitive adhesive tape. However, even in such case, when the lengthwise directions are made non-parallel with each other to cause the tapes to differ from each other in direction in which peeling progresses, the progress of the peeling can be suppressed by a surrounding unpeeled portion. Specifically, even when the antifouling pressure-sensitive adhesive tape **100b** is going to peel together with the easily adhering pressure-sensitive adhesive tape **200a** at the adhesion point **b** with the easily adhering pressure-sensitive adhesive tape **200a** as illustrated in FIG. 1, the progress of the peeling can be prevented because the antifouling pressure-sensitive adhesive tapes **100a** and **100c** adjacent to the antifouling pressure-sensitive adhesive tape **100b** are bonded to hold both sides of the adhesion point **b** of the easily adhering pressure-sensitive adhesive tape **200a.** It should be noted that when the two or more easily adhering pressure-sensitive adhesive tapes are bonded onto the surface of the structure **60,** the antifouling pressure-sensitive adhesive tape is preferably bonded so that its lengthwise direction and those of all the easily adhering pressure-sensitive adhesive tapes are non-parallel with each other. However, the antifouling pressure-sensitive adhesive tape may be bonded so that its lengthwise direction and those of part of the easily adhering pressure-sensitive adhesive tapes are parallel with each other to the extent that the effects of the present invention are obtained.

An angle formed between the lengthwise direction of the easily adhering pressure-sensitive adhesive tape and the lengthwise direction of the antifouling pressure-sensitive adhesive tape is preferably from 30° to 150°, more preferably from 45° to 135°, still more preferably from 60° to 120°, particularly preferably from 80° to 100°. When the antifouling pressure-sensitive adhesive tape is bonded onto the easily adhering pressure-sensitive adhesive tape so that such angle is formed, both the pressure-sensitive adhesive tapes can be suitably prevented from peeling together because the respective pressure-sensitive adhesive tapes largely differ from each other in direction in which peeling progresses.

The number of the adhesion points of the antifouling pressure-sensitive adhesive tape with the easily adhering pressure-sensitive adhesive tape is preferably 2 or more, more preferably 3 or more. In this case, an interval between the adhesion points is preferably from 0.1 m to 5 m, more preferably from 0.3 m to 3 m. With such interval, the progress of the peeling of the antifouling pressure-sensitive adhesive tape can be economically prevented while being subdivided in a stepwise manner.

An application liquid containing a surfactant is generally used upon bonding of a pressure-sensitive adhesive tape including a wide area from the viewpoint of preventing, for example, the trapping of air bubbles. Any appropriate application liquid may be used in the present invention as well from the same viewpoint. When an application liquid is used in the step 2a-2, adjacent antifouling pressure-sensitive adhesive tapes are preferably bonded without being caused to overlap each other. This is because of the following reason: the application liquid can be easily extruded from their junction, and as a result, the tapes can be bonded with good adhesiveness. The adjacent antifouling pressure-sensitive adhesive tapes are preferably bonded while being butted against each other so that no gap occurs in the junction. However, when it is difficult to bond the adjacent antifouling pressure-sensitive adhesive tapes while butting the tapes against each other, the tapes may be bonded while their end portions are caused to overlap each other to the extent that the application liquid can be easily removed. In this case, the width by which the end portions are caused to overlap each other is preferably 1 cm or less. In addition, when the tapes are not bonded while being caused to overlap each other, a gap (having a size of, for example, 1 cm or less) may be present in the junction between the adjacent antifouling pressure-sensitive adhesive tapes to the extent that the effects of the present invention are not impaired.

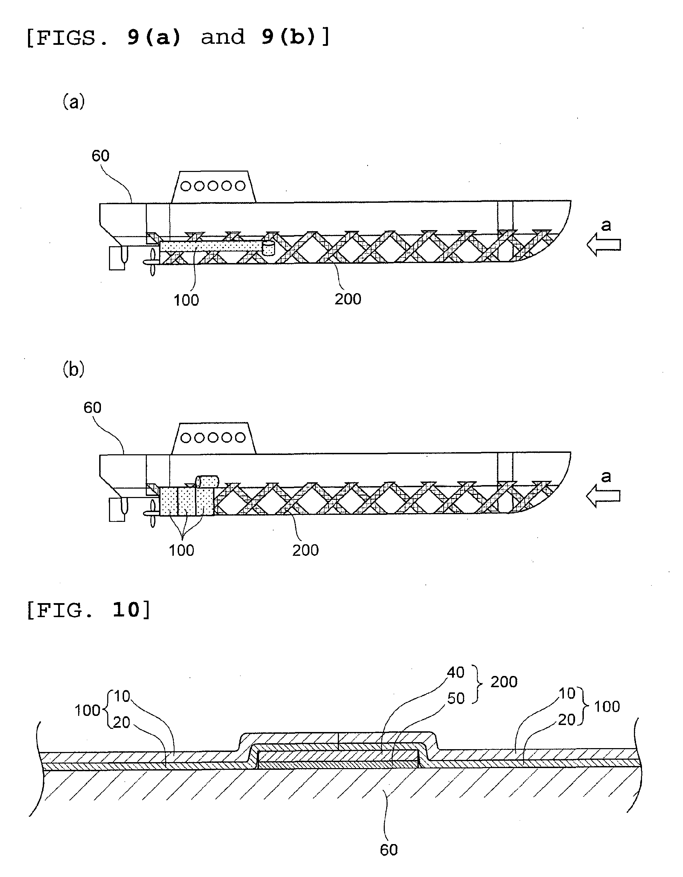

The direction in which the antifouling pressure-sensitive adhesive tape is bonded is not limited, and the tape may be bonded so that its lengthwise direction is in any appropriate direction depending on workability and the like. Specifically, the antifouling pressure-sensitive adhesive tape 100 may be bonded so that its lengthwise direction is parallel with the direction in which the stress **a** due to a fluid resistance such as a water flow or an air flow acts as illustrated in FIG. **9(a)****,** the tape may be bonded so that the lengthwise direction is perpendicular to the direction in which the stress **a** acts as illustrated in FIG. **9(b)****,** or the tape may be bonded so that the lengthwise direction is neither parallel with nor perpendicular to the direction in which the stress acts.

### [Second embodiment]

The method of preventing fouling of a structure according to the second embodiment of the present invention includes the following steps:
(step 1) preparing an antifouling pressure-sensitive adhesive tape including a base material layer (A) and a pressure-sensitive adhesive layer (A) formed on one surface side thereof, and an easily adhering pressure-sensitive adhesive tape including a base material layer (B) having one surface easily adhering to the pressure-sensitive adhesive layer (A) and apressure-sensitive adhesive layer (B) formed on the other surface side thereof; and
(step 2b) bonding the two or more antifouling pressure-sensitive adhesive tapes and the at least one easily adhering pressure-sensitive adhesive tape onto a surface of a structure to be prevented from being fouled so that the antifouling pressure-sensitive adhesive tapes are prevented from overlapping each other and a junction therebetween is on a surface of the base material layer (B) of the easily adhering pressure-sensitive adhesive tape.

According to such method of preventing fouling, the pressure-sensitive adhesive layer (A) of each antifouling pressure-sensitive adhesive tape and the base material layer (B) of the easily adhering pressure-sensitive adhesive tape can be caused to adhere to each other in an extremely strong manner while the adhesive strength of each of the pressure-sensitive adhesive layer (A) of the antifouling pressure-sensitive adhesive tape and the pressure-sensitive adhesive layer (B) of the easily adhering pressure-sensitive adhesive tape to the surface of the structure is suppressed to the extent that each pressure-sensitive adhesive tape can be peeled and removed. As a result, the peeling of the antifouling pressure-sensitive adhesive tapes from the junction can be suppressed without any reduction in workability at the time of the peeling and removal. In addition, according to the method of preventing fouling of the present invention, the easily adhering pressure-sensitive adhesive tape is arranged below a junction between the antifouling pressure-sensitive adhesive tapes, and hence even when a gap occurs in the junction and an aquatic organism adheres, the area to which the organism can adhere is small and the organism can be easily removed by peeling the pressure-sensitive adhesive tapes.

### [Step 1]

In the step 1, the antifouling pressure-sensitive adhesive tape including the base material layer (A) and the pressure-sensitive adhesive layer (A) formed on one surface side thereof, and the easily adhering pressure-sensitive adhesive tape including the base material layer (B) having one surface easily adhering to the pressure-sensitive adhesive layer (A) and the pressure-sensitive adhesive layer (B) formed on the other surface side thereof are prepared. The same description as that of Step 1 in the first embodiment is applicable to Step 1 in the second embodiment.

### [Step 2b]

In the step 2b, as illustrated in FIG. **10****,** the two or more antifouling pressure-sensitive adhesive tapes **100** and the at least one easily adhering pressure-sensitive adhesive tape **200** are bonded onto the surface of the structure **60** to be prevented from being fouled so that the antifouling pressure-sensitive adhesive tapes **100** are prevented from overlapping each other and their junction is on the surface of the base material layer (B) **40** of the easily adhering pressure-sensitive adhesive tape **200.** The antifouling pressure-sensitive adhesive tapes are typically bonded to cover the entirety of the surface to be prevented from being fouled. However, the tapes may be bonded to cover only a desired site of the surface (such as a bent portion to be described later) as required.

In the step 2b, the adjacent antifouling pressure-sensitive adhesive tapes are preferably bonded while being butted against each other so that no gap occurs in their junction. However, a gap (having a size of, for example, 1 cm or less) may be present in the junction to the extent that the effects of the present invention are not impaired. In addition, both end portions of the antifouling pressure-sensitive adhesive tapes may overlap each other by 1 cm or more on the easily adhering pressure-sensitive adhesive tape from the viewpoint of securing the strong adhesion between each antifouling pressure-sensitive adhesive tape and the easily adhering pressure-sensitive adhesive tape.

In addition, an application liquid containing a surfactant is generally used upon bonding of a pressure-sensitive adhesive tape including a wide area from the viewpoint of preventing, for example, the trapping of air bubbles. Any appropriate application liquid can be used in the present invention as well from the same viewpoint. In the present invention, the antifouling pressure-sensitive adhesive tapes are bonded without being caused to overlap each other. Accordingly, the application liquid can be easily extruded from their junction, and as a result, the tapes can be bonded with good adhesiveness. In contrast, when the antifouling pressure-sensitive adhesive tapes are bonded so that their end portions overlap each other, the following problem arises : an escape for the application liquid disappears and hence the adhesiveness may reduce.

The structure having the surface to be prevented from being fouled may be any appropriate structure as long as the structure has the surface to be prevented from being fouled. Examples of the structure include underwater structures such as a ship, a buoy, a harbor facility, a maritime oil field facility, a cooling water supply line for a power plant, and a cooling water supply line for a factory, a propeller for wind power generation, a bridge pier, abuilding, anautomobile, heavymachinery, and aircrafts. Of those, an underwater structure is preferred. In addition, an antifouling paint or an anticorrosive paint may be applied onto the surface of the structure to be prevented from being fouled.

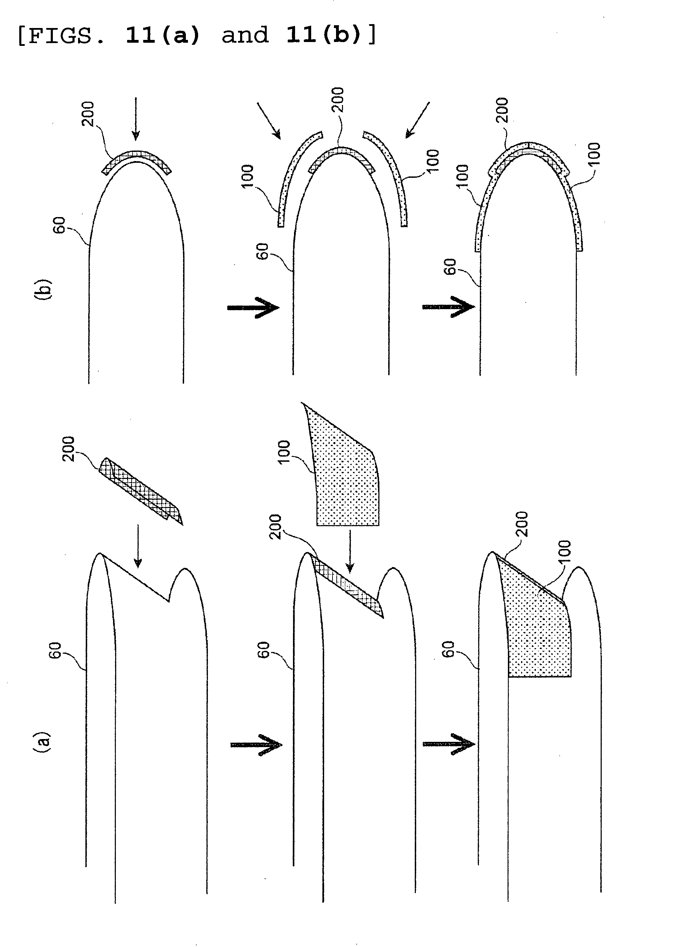

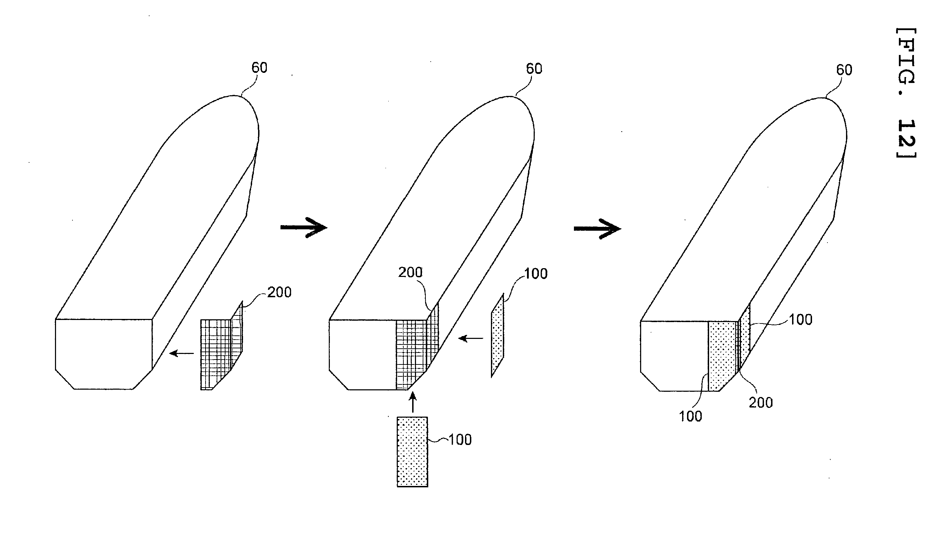

When the surface of the structure to be prevented from being fouled has a bent portion, it has heretofore been difficult to bend the antifouling pressure-sensitive adhesive tape and bond the tape to an acute bent portion in some cases. On the other hand, when the antifouling pressure-sensitive adhesive tapes are bonded while being butted against each other so that their junction is arranged at the tip of the bent portion (such as a ridge line), an bonding operation becomes easy but the risk of peeling may arise because the tapes are exposed to such a severe condition as follows: a strong water flow impinges on the junction. In contrast, in the present invention, the easily adhering pressure-sensitive adhesive tape is preferably arranged at the tip of the bent portion. Specifically, FIGS. **11(a)** and **11(b)** each illustrate a schematic view illustrating a preferred arrangement state of the antifouling pressure-sensitive adhesive tapes and the easily adhering pressure-sensitive adhesive tape in the case where the surface of the structure to be prevented from being fouled is a bow (FIG. 11**(a)** is a perspective view of the bow and FIG. **11(b)** is a top view thereof) . In addition, FIG. **12** illustrates a schematic view illustrating a preferred arrangement state of the antifouling pressure-sensitive adhesive tapes and the easily adhering pressure-sensitive adhesive tape in the case where the surface of the structure to be prevented from being fouled is a stern. As illustrated in the figures, first, the easily adhering pressure-sensitive adhesive tape **200** is bonded onto the tip of the bent portion, and then the antifouling pressure-sensitive adhesive tapes **100** are bonded while being butted against each other so that their junction is at the tip. Thus, a deformation amount required for each antifouling pressure-sensitive adhesive tape **100** can be reduced, and hence the tapes can be easily and strongly bonded. It should be noted that the term "tip of the bent portion" refers to, in the case of a bent portion that is linearly bent, the portion of the bent line or refers to, in the case of a bent portion that is curved, the portion having the largest curvature.

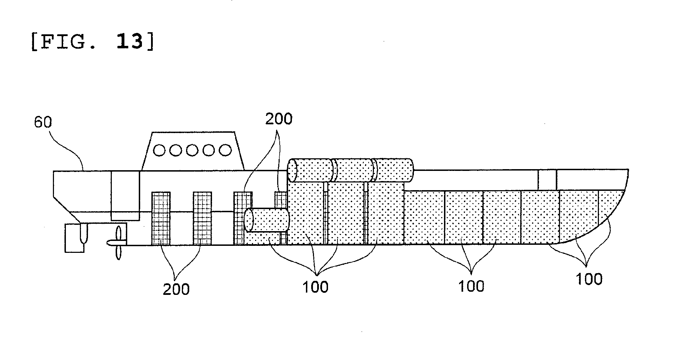

FIG. **13** is a schematic view illustrating one preferred embodiment (embodiment a) of the step 2b. In the embodiment a, the easily adhering pressure-sensitive adhesive tapes **200** are bonded onto the surface of the structure **60** to be prevented from being fouled (the bottom portion of a ship in the illustrated example) and then the antifouling pressure-sensitive adhesive tapes **100** are bonded. Specifically, each easily adhering pressure-sensitive adhesive tape is bonded onto a site serving as the junction between the antifouling pressure-sensitive adhesive tapes in advance, and then the antifouling pressure-sensitive adhesive tapes are bonded so that their end portions are arranged on the easily adhering pressure-sensitive adhesive tape and are not prevented from overlapping each other.

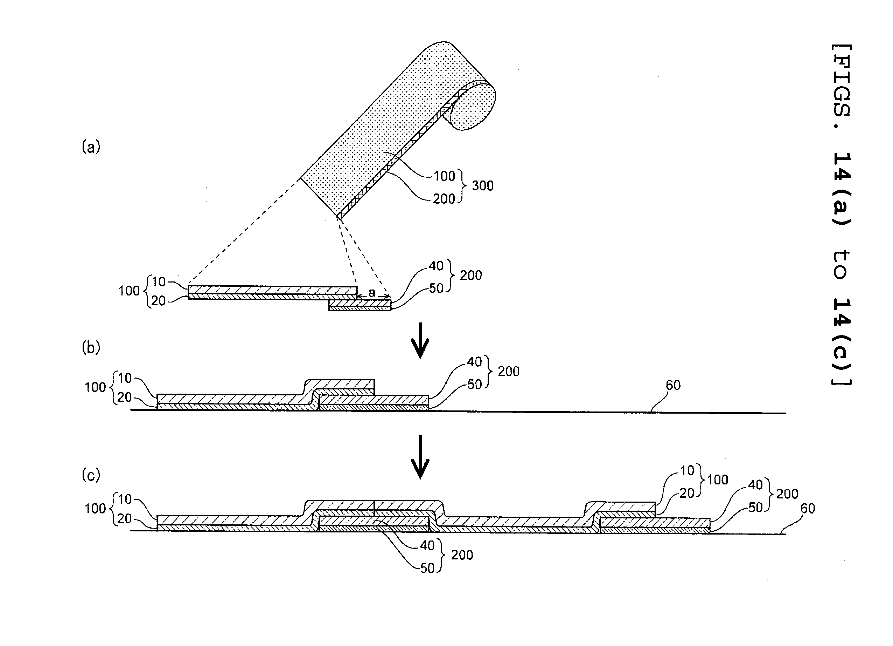

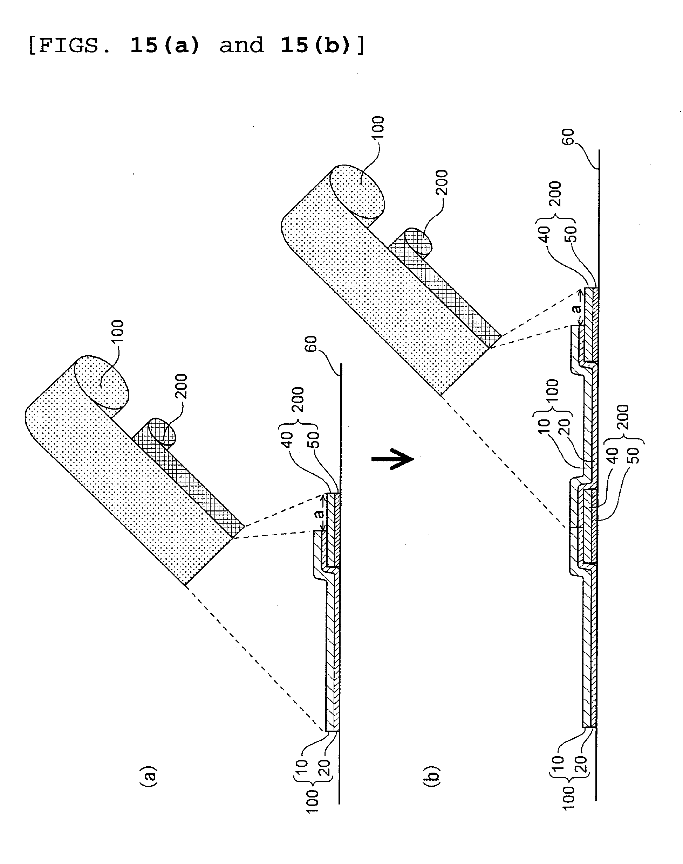

FIGS. **14 (a)** to **14(c)** and FIGS. **15 (a)** and **15** (b) are each a schematic view illustrating another preferred embodiment (embodiment b) of the step 2b. In the embodiment b, the antifouling pressure-sensitive adhesive tape **100** is bonded onto the surface of the base material layer (B) **40** of the easily adhering pressure-sensitive adhesive tape **200** in advance so that the antifouling pressure-sensitive adhesive tape is shifted by a predetermined width **(a)** and their lengthwise directions are aligned to be substantially parallel with each other, and then two or more sets of the antifouling pressure-sensitive adhesive tape **100** and the easily adhering pressure-sensitive adhesive tape **200** bonded onto each other are bonded onto the surface of the structure **60** to be prevented from being fouled while the groups are caused to overlap each other with a shift so that the antifouling pressure-sensitive adhesive tapes **100** are not prevented from overlapping each other and their junction is on the surface of the base material layer (B) **40** of the easily adhering pressure-sensitive adhesive tape **200**. It should be noted that in the second embodiment, the term "substantially parallel" can mean, for example, 0°±20°, preferably 0°±10°. In addition, a width **a** by which the antifouling pressure-sensitive adhesive tape is shifted upon its bonding onto the surface of the base material layer (B) of the easily adhering pressure-sensitive adhesive tape is such a width as to be capable of functioning as an adhesion allowance for the antifouling pressure-sensitive adhesive tape to be bonded thereon, and may be, for example, from about 1 cm to 20 cm, preferably from 5 cm to 10 cm. In the embodiment b, the antifouling pressure-sensitive adhesive tape and the easily adhering pressure-sensitive adhesive tape are integrated before being bonded onto the surface of the structure. Accordingly, the alignment of the pressure-sensitive adhesive tapes becomes relatively easy. As a result, the adhesion allowance can be reduced and hence an easily adhering pressure-sensitive adhesive tape narrower than that used in the embodiment a can be used.

In the embodiment b, the following may be adopted: as illustrated in FIGS. **14 (a)** to **14(c)**, a pressure-sensitive adhesive tape **300** obtained by bonding the antifouling pressure-sensitive adhesive tape **100** and the easily adhering pressure-sensitive adhesive tape **200** onto each other is prepared in advance, and the pressure-sensitive adhesive tapes **300** each obtained by the bonding are sequentially bonded onto the surface of the structure **60.** Alternatively, the bonding of the antifouling pressure-sensitive adhesive tape **100** and the easily adhering pressure-sensitive adhesive tape **200,** and the bonding of the bonded pressure-sensitive adhesive tapes onto the surface of the structure **60** maybe continuously performed as illustrated in FIGS. **15****.**

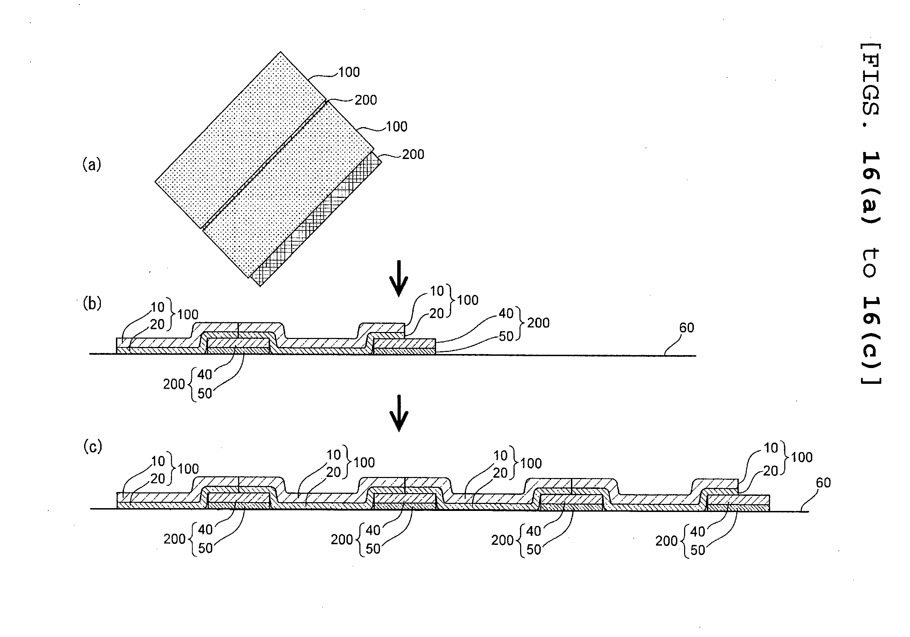

FIGS. **16 (a)** to **16(c)** are each a schematic view illustrating still another preferred embodiment (embodiment c) of thestep2b. In the embodiment c, the antifoulingpressure-sensitive adhesive tapes **100** and the easily adhering pressure-sensitive adhesive tape **200** are alternately bonded in advance so that the antifouling pressure-sensitive adhesive tapes 100 are not prevented from overlapping each other and their junction is on the surface of the base material layer (B) **40** of the easily adhering pressure-sensitive adhesive tape **200,** and then the antifouling pressure-sensitive adhesive tapes and the easily adhering pressure-sensitive adhesive tape bonded onto each other are bonded onto the surface of the structure **60.** In the embodiment c, the antifouling pressure-sensitive adhesive tapes and the easily adhering pressure-sensitive adhesive tapes maybe alternately bonded in the same number, or the number of the pressure-sensitive adhesive tapes of one kind to be bonded may be larger than that of the tapes of the other kind by one so that pressure-sensitive adhesive tapes at both ends are the same. The total number of the pressure-sensitive adhesive tapes to be bonded can be appropriately set depending on the workability and the like, and is preferably from 3 to 8. In the embodiment c as well, as in the embodiment b, the antifouling pressure-sensitive adhesive tape and the easily adhering pressure-sensitive adhesive tape are integrated before being bonded onto the surface of the structure. Accordingly, the alignment of the pressure-sensitive adhesive tapes becomes relatively easy. As a result, the adhesion allowance can be reduced and hence an easily adhering pressure-sensitive adhesive tape narrower than that used in the embodiment a can be used.

In the step 2b, only one of the embodiments a to c may be performed, or two or more thereof may be performed in combination depending on the shape, size, and the like of the structure.

### [B. Pressure-sensitive adhesive tape set]

Apressure-sensitive adhesive tape set of the present invention is a pressure-sensitive adhesive tape set for use in the method of preventing fouling of a structure according to the second embodiment. The set includes: an antifouling pressure-sensitive adhesive tape including a base material layer (A) and a pressure-sensitive adhesive layer (A) formed on one surface side thereof; and an easily adhering pressure-sensitive adhesive tape including a base material layer (B) having one surface easily adhering to the pressure-sensitive adhesive layer (A) and a pressure-sensitive adhesive layer (B) formed on the other surface side thereof. Details about the antifouling pressure-sensitive adhesive tape and the easily adhering pressure-sensitive adhesive tape are as described in the section A.

In one embodiment, the pressure-sensitive adhesive tape set may be of a form in which the antifouling pressure-sensitive adhesive tape is bonded onto the surface of the base material layer (B) of the easily adhering pressure-sensitive adhesive tape so that the antifouling pressure-sensitive adhesive tape is shifted by a predetermined width and their lengthwise directions are aligned to be substantially parallel with each other. The pressure-sensitive adhesive tape set of such form is suitably applicable in the embodiment b of the step 2b and can be provided as, for example, such a roll body as illustrated in FIG. **14(a)****.**

In another embodiment, the pressure-sensitive adhesive tape set may be of a form in which the antifouling pressure-sensitive adhesive tapes and the easily adhering pressure-sensitive adhesive tape are alternately bonded so that the antifouling pressure-sensitive adhesive tapes are not prevented from overlapping each other and their junction is on the surface of the base material layer (B) of the easily adhering pressure-sensitive adhesive tape. In the form, the antifouling pressure-sensitive adhesive tapes and the easily adhering pressure-sensitive adhesive tapes may be alternately bonded in the same number, or the number of the pressure-sensitive adhesive tapes of one kind to be bonded may be larger than that of the tapes of the other kind by one so that pressure-sensitive adhesive tapes at both ends are the same. The total number of the pressure-sensitive adhesive tapes to be bonded can be, for example, from 3 to 8. The pressure-sensitive adhesive tape set of such form is suitably applicable in the embodiment c of the step 2b and may be exemplified in, for example, FIG. **16(a)****.**

### [C. Structure]

A structure according to one embodiment of the present invention has a surface to be prevented from being fouled, and in at least part of the surface, an antifouling pressure-sensitive adhesive tape including a base material layer (A) and a pressure-sensitive adhesive layer (A) formed on one surface side thereof is bonded onto an easily adhering pressure-sensitive adhesive tape including a base material layer (B) having one surface easily adhering to the pressure-sensitive adhesive layer (A) and a pressure-sensitive adhesive layer (B) formed on the other surface side thereof so that their lengthwise directions are non-parallel with each other. Details about the antifouling pressure-sensitive adhesive tape and the easily adhering pressure-sensitive adhesive tape, and methods of bonding the tapes are as described with regard to the method of preventing fouling of a structure according to the first embodiment.

A structure according to another embodiment of the present invention has a surface to be prevented from being fouled, and two or more antifouling pressure-sensitive adhesive tapes each having a base material layer (A) and a pressure-sensitive adhesive layer (A) formed on one surface side thereof, and at least one easily adhering pressure-sensitive adhesive tape including a base material layer (B) having one surface easily adhering to the pressure-sensitive adhesive layer (A) and a pressure-sensitive adhesive layer (B) formed on the other surface side thereof are bonded onto at least part of the surface so that the antifouling pressure-sensitive adhesive tapes are not prevented from overlapping each other and their junction is on the surface of the base material layer (B) of the easily adhering pressure-sensitive adhesive tape. Details about the antifouling pressure-sensitive adhesive tape and the easily adhering pressure-sensitive adhesive tape, and methods of bonding the tapes are as described with regard to the method of preventing fouling of a structure according to the second embodiment.

The structure may be any appropriate structure as long as the structure has the surface to be prevented from being fouled. Examples of the structure include underwater structures such as a ship, a buoy, a harbor facility, a maritime oil field facility, a cooling water supply line for a power plant, and a cooling water supply line for a factory, a propeller for wind power generation, a bridge pier, a building, an automobile, heavy machinery, and aircrafts. The structure is preferably an underwater structure because the effect of the method of preventing fouling of the present invention is suitably obtained.

### Examples

The present invention is described below by way of Examples. However, the present invention is not limited thereto.

### [Example A-1]

### (Antifouling pressure-sensitive adhesive tape)

71 Parts by weight of isobornyl acrylate (trade name: "IBXA, " manufactured by Osaka Organic Chemical Industry Ltd.), 19 parts by weight of n-butyl acrylate (BA, manufactured by TOAGOSEI CO., LTD.), and 10 parts by weight of acrylic acid (AA) as (meth) acrylic monomers, 68.4 parts by weight of poly(oxytetramethylene) glycol having a number-average molecular weight of 650 (PTMG650, manufactured by Mitsubishi Chemical Corporation) as a polyol, and 0.01 part by weight of dibutyltin dilaurate (DBTL) as a catalyst were loaded into a reaction vessel provided with a cooling tube, a temperature gauge, and a stirring device. While the mixture was stirred, 25.5 parts by weight of hydrogenated xylylene diisocyanate (HXDI, manufactured by Mitsui Chemical Polyurethane) were dropped to the mixture, followed by a reaction at 65°C for 5 hours. Thus, a urethane polymer-(meth)acrylic monomer mixture was obtained. After that, 6.1 parts by weight of hydroxyethyl acrylate (trade name: "ACRYX HEA, " manufactured by TOAGOSEI CO., LTD.) were loaded into the mixture, and the whole was subjected to a reaction at 65°C for 1 hour to provide an acryloyl group-terminated urethane polymer-(meth)acrylic monomer mixture.

1 Part by weight of 3-acryloxypropyl trimethoxysilane (KBM-5103, manufactured by Shin-Etsu Chemical Co., Ltd.), 0.25 part by weight of diphenyl(2,4,6-trimethoxybenzoyl)phosphine oxide (trade name: "Lucirin TPO," manufactured by BASF) as a photopolymerization initiator, 1.25 parts by weight of a UV absorbing agent (trade name: "TINUVIN 123," manufactured by BASF), and 0.6 part by weight of an antioxidizing agent (trade name: "TINUVIN 400, " manufactured by BASF) were added to the resultant acryloyl group-terminated urethane polymer-(meth)acrylic monomer mixture to provide a syrup.

The resultant syrup was applied onto the surface of a separator (trade name: "MRF38," manufactured by Mitsubishi Plastics, Inc., thickness: 38 µm) with an applicator to form a syrup layer having a thickness of 150 µm. A cover separator (trade name: "MRF38," manufactured by Mitsubishi Plastics, Inc., thickness: 38 µm) was attached onto the syrup layer with a hand roller, and the resultant was irradiated with UV light from a UV lamp (BL type) (UV irradiance: 3.4 mW/cm², cumulative dose: 2, 000 mJ/cm²) to provide a base material layer (A).

The resultant base material layer (A) was cut into a piece measuring 10 mm wide by 100 mm long, and an S-S test (temperature: 23°C, humidity: 65%RH, tension speed: 200 mm/min) was performed with a tensile tester (trade name: "Autograph AG-X 200N," manufactured by Shimadzu Corporation) while the piece was placed so that a chuck-to-chuck distance became 50 mm. A rupture elongation and rupture stress determined on the basis of its measured value were 415% and 27.1 MPa, respectively. In addition, a modulus of elasticity determined from the slope of the initial rise-up of the resultant S-S curve was 4.9 MPa.

A release film on one side of a commercially available pressure-sensitive adhesive (manufactured by Nitto Denko Corporation, product name: "No. 591") having the construction "release film (thickness=about 38 µm)/acrylic pressure-sensitive adhesive layer (thickness=50 µm)/release film (thickness=about 38 µm) " was peeled, and the resultant was bonded as a pressure-sensitive adhesive layer (A) onto one surface of the base material layer (A) . Next, an antifouling paint composition (manufactured by CHUGOKU MARINE PAINTS, LTD. , product name: "PELLER CLEAN") was applied onto the other surface of the base material layer (A) so that its thickness after drying became 100 µm, and the composition was dried at normal temperature for 24 hours to form an antifouling layer. Thus, an antifouling pressure-sensitive adhesive tape (1) was produced. The construction of the antifouling pressure-sensitive adhesive tape (1) was as follows: the antifouling layer (thickness=100 µm), the base material layer (A) (thickness=150 µm), and the pressure-sensitive adhesive layer (A) (thickness=50 µm). In addition, the resultant antifouling pressure-sensitive adhesive tape (1) had a width of 20 cm.

### (Easily adhering pressure-sensitive adhesive tape)

A polyurethane elastomer sheet (manufactured by Sheedom Co. , Ltd. , product name: "DUS451, " thickness: 150 µm) was used as a base material layer (B). Easy-adhesion treatment was performed by forming a film on the surface of the base material layer (B) according to a dipping method involving using a 0.1 wt% toluene solution of a silane coupling agent (manufactured by Shin-Etsu Chemical Co., Ltd., product name: "KBM5103"). A release film on one side of a commercially available pressure-sensitive adhesive (manufactured by Nitto Denko Corporation, product name: "No. 5919") having the construction "release film (thickness=about 38 µm)/acrylic pressure-sensitive adhesive layer (thickness=50 µm)/release film (thickness=about 38 µm) " was peeled, and the resultant was bonded as a pressure-sensitive adhesive layer (B) onto one surface of the base material layer (B). Thus, an easily adhering pressure-sensitive adhesive tape (1) was produced. The construction of the easily adhering pressure-sensitive adhesive tape (1) was as follows: the base material layer (B) (thickness=150 µm) and the pressure-sensitive adhesive layer (B) (thickness=50 µm).

The easily adhering pressure-sensitive adhesive tapes (1) were bonded onto the surface of a ship made of an FRP in contact with water at an interval of 50 cm so that their lengthwise directions became directions perpendicular to the travelling direction of the ship (direction parallel with a water surface). Next, the antifouling pressure-sensitive adhesive tapes (1) were bonded onto the surface while being butted against each other without any gap so that their lengthwise directions became the travelling direction of the ship. An angle formed between the lengthwise directions of the easily adhering pressure-sensitive adhesive tape (1) and the antifouling pressure-sensitive adhesive tape (1) at the point of intersection of the respective pressure-sensitive adhesive tapes was 90°.

After that, an attempt was made to forcibly peel the antifoulingpressure-sensitive adhesive tape (1). As a result, the tape was able to be peeled up to its adhesion point with the easily adhering pressure-sensitive adhesive tape (1), but could not be peeled beyond the adhesion point because the adhesion of the antifouling pressure-sensitive adhesive tape (1) and the easily adhering pressure-sensitive adhesive tape (1) at the adhesion point was extremely strong. Inaddition, the peeling of the easily adhering pressure-sensitive adhesive tape (1) did not progress because both sides of the adhesion points of the easily adhering pressure-sensitive adhesive tape (1) were supported by the other adjacent antifouling pressure-sensitive adhesive tapes (1).

### [Example A-2]

### (Antifouling pressure-sensitive adhesive tape)

A polyurethane elastomer sheet (manufactured by Sheedom Co. , Ltd. , product name: "DUS451, " thickness: 150 µm) was used as a base material layer (A). A release film on one side of a commercially available pressure-sensitive adhesive (manufactured by Nitto Denko Corporation, product name: "HJ9150") having the construction "release film (thickness=about 38 µm)/acrylic pressure-sensitive adhesive layer (thickness=50 µm)/release film (thickness=about 38 µm) " was peeled, and the resultant was bonded as a pressure-sensitive adhesive layer (A) onto one surface of the base material layer (A) . Next, an antifouling paint composition (manufactured by CHUGOKU MARINE PAINTS, LTD. , product name: "PELLER CLEAN") was applied onto the other surface of the base material layer (A) so that its thickness after drying became 100 µm, and the composition was dried at 150°C for 10 minutes to form an antifouling layer. Thus, an antifouling pressure-sensitive adhesive tape (2) was produced. The construction of the antifouling pressure-sensitive adhesive tape (2) was as follows: the antifouling layer (A) (thickness=100 µm), the base material layer (A) (thickness=150 µm), and the pressure-sensitive adhesive layer (A) (thickness=50 µm).

### (Easily adhering pressure-sensitive adhesive tape)

A PET film (manufactured by Toray Industries, Inc., product name: "LUMIRROR S10, " thickness: 50 µm) was used as the base material layer (B), and easy-adhesion treatment was performed by forming an SiO₂-deposited film (thickness: 15 nm) on one surface of the film. A release film on one side of a commercially available pressure-sensitive adhesive (manufactured by Nitto Denko Corporation, product name: "No. 591") was peeled, and the resultant was bonded as the pressure-sensitive adhesive layer (B) to the surface of the base material layer (B) on which the SiO₂-deposited film was not formed. Thus, an easily adhering pressure-sensitive adhesive tape (2) was produced. The construction of the easily adhering pressure-sensitive adhesive tape (2) was as follows: the base material layer (B) (thickness=50 µm) and the pressure-sensitive adhesive layer (B) (thickness=50 µm). In addition, the easily adhering pressure-sensitive adhesive tape (2) had a width of 50 mm.

The easily adhering pressure-sensitive adhesive tapes (2) were bonded onto the surface of a ship made of an FRP in contact with water in a lattice manner so that the angle of their lengthwise directions with respect to the travelling direction of the ship (direction parallel with a water surface) became ±45°. In this case, the length of the diagonal line of a lattice to be formed was set to 70 cm. Next, the antifouling pressure-sensitive adhesive tapes (2) were bonded onto the surface while being butted against each other without any gap so that their lengthwise directions became directions perpendicular to the travelling direction of the ship. An angle formed between the lengthwise directions of the easily adhering pressure-sensitive adhesive tape (2) and the antifouling pressure-sensitive adhesive tape (2) at the point of intersection of the respective pressure-sensitive adhesive tapes was ±45°.

After that, an attempt was made to forcibly peel the antifouling pressure-sensitive adhesive tape (2). As a result, the tape was able to be peeled up to its adhesion point with the easily adhering pressure-sensitive adhesive tape (2), but could not be peeled beyond the adhesion point because the adhesion of the antifouling pressure-sensitive adhesive tape (2) and the easily adhering pressure-sensitive adhesive tape (2) at the adhesion point was extremely strong. Inaddition, thepeelingof theeasilyadhering pressure-sensitive adhesive tape (2) did not progress because both sides of the adhesion points of the easily adhering pressure-sensitive adhesive tape (2) were supported by the other adjacent antifouling pressure-sensitive adhesive tapes (2).

### [Example A-3]

### (Antifouling pressure-sensitive adhesive tape)

A polyurethane elastomer sheet (manufactured by Nihon Matai Co., Ltd., product name: "ESMER URS-PX," thickness: 150 µm) was used as the base material layer (A). A release film on one side of a commercially available pressure-sensitive adhesive (manufactured by Nitto Denko Corporation, product name: "No. 5919") was peeled, and the resultant was bonded as the pressure-sensitive adhesive layer (A) onto one surface of the base material layer (A). Next, an antifouling paint composition (manufactured by CHUGOKU MARINE PAINTS, LTD. , product name: "PELLER CLEAN") was applied onto the other surface of the base material layer (A) so that its thickness after drying became 100 µm, and the composition was dried at 150°C for 10 minutes to form an antifouling layer. Thus, an antifouling pressure-sensitive adhesive tape (3) was produced. The construction of the antifouling pressure-sensitive adhesive tape (3) was as follows: the antifouling layer (A) (thickness=100 µm), the base material layer (A) (thickness=150 µm), and the pressure-sensitive adhesive layer (A) (thickness=50 µm).

### (Easily adhering pressure-sensitive adhesive tape)

Glass cloth (manufactured by MAEDA GLASS CO., LTD., product name: "EP11, " thickness: 110 µm) was used as the base material layer (B). Easy-adhesion treatment was performed by: immersing the glass cloth in a 3 wt% aqueous solution of a silane coupling agent (manufactured by Dow Corning Toray Co. , Ltd. , product name: "Z6040") ; and drying the resultant at normal temperature to form a film on its surface. A release film on one side of a commercially available pressure-sensitive adhesive (manufactured by Nitto Denko Corporation, product name: "HJ9150") was peeled, and the resultant was bonded as the pressure-sensitive adhesive layer (B) onto one surface of the glass cloth after the treatment. Thus, an easily adhering pressure-sensitive adhesive tape (3) was produced. The construction of the easily adhering pressure-sensitive adhesive tape (3) was as follows: the base material layer (B) (thickness=110 µm) and the pressure-sensitive adhesive layer (B) (thickness=50 µm).

The easily adhering pressure-sensitive adhesive tapes (3) were bonded onto the surface of a ship made of an FRP in contact with water at an interval of 100 cm so that their lengthwise directions formed an angle of 60° counterclockwise with respect to the travelling direction of the ship. Next, the antifouling pressure-sensitive adhesive tapes (3) were bonded onto the surface while being butted against each other without any gap so that their lengthwise directions became directions perpendicular to the travelling direction of the ship. An angle formed between the lengthwise directions of the easily adhering pressure-sensitive adhesive tape (3) and the antifouling pressure-sensitive adhesive tape (3) at the point of intersection of the respective pressure-sensitive adhesive tapes was 30°.

After that, an attempt was made to forcibly peel the antifouling pressure-sensitive adhesive tape (3). As a result, the tape was able to be peeled up to its adhesion point with the easily adhering pressure-sensitive adhesive tape (3), but could not be peeled beyond the adhesion point because the adhesion of the antifouling pressure-sensitive adhesive tape (3) and the easily adhering pressure-sensitive adhesive tape (3) at the adhesion point was extremely strong. In addition, the peel ing of the easily adhering pressure-sensitive adhesive tape (3) did not progress because both sides of the adhesion points of the easily adhering pressure-sensitive adhesive tape (3) were supported by the other adjacent antifouling pressure-sensitive adhesive tapes (3).

### [Example A-4]

### (Antifouling pressure-sensitive adhesive tape)

An antifouling pressure-sensitive adhesive tape (4) was produced in the same manner as in Example A-1 except that a commercially available pressure-sensitive adhesive (manufactured by Nitto Denko Corporation, product name: "HJ9150") was used as the pressure-sensitive adhesive layer (A). The construction of the antifouling pressure-sensitive adhesive tape (4) was as follows: the antifouling layer (thickness=100 µm), the base material layer (A) (thickness=150 µm), and the pressure-sensitive adhesive layer (A) (thickness=50 µm).

### (Easily adhering pressure-sensitive adhesive tape)

Easy-adhesion treatment was performed by subjecting the polyimide film surface of a polyimide tape (manufactured by Nitto Denko Corporation, product name: "360UL") to nitrogen gas sputtering. Specifically, an amide group was introduced by etching the surface under the sputtering conditions of a gas pressure of 0.4 Pa, a nitrogen gas introduction amount in a standard state of 200 cc/min, a treatment power of glow discharge of 0.4 kW, a treatment time of 5 minutes, and a treatment frequency of 13.56 MHz. Thus, an easily adhering pressure-sensitive adhesive tape (4) was produced. The resultant easily adhering pressure-sensitive adhesive tape (4) had a width of 50 mm.

The easily adhering pressure-sensitive adhesive tapes (4) were bonded onto the surface of a ship made of an FRP in contact with water at an interval of 30 cm so that their lengthwise directions formed an angle of 60° counterclockwise with respect to the travelling direction of the ship. Next, the antifouling pressure-sensitive adhesive tapes (4) were bonded onto the surface while being butted against each other without any gap so that their lengthwise directions became the travelling direction of the ship. An angle formed between the lengthwise directions of the easily adhering pressure-sensitive adhesive tape (4) and the antifouling pressure-sensitive adhesive tape (4) at the point of intersection of the respective pressure-sensitive adhesive tapes was 60°.

After that, an attempt was made to forcibly peel the antifouling pressure-sensitive adhesive tape (4). As a result, the tape was able to be peeled up to its adhesion point with the easily adhering pressure-sensitive adhesive tape (4), but could not be peeled beyond the adhesion point because the adhesion of the antifouling pressure-sensitive adhesive tape (4) and the easily adhering pressure-sensitive adhesive tape (4) at the adhesion point wasextremelystrong. Inaddition, thepeelingof the easily adhering pressure-sensitive adhesive tape (4) did not progress because both sides of the adhesion points of the easily adhering pressure-sensitive adhesive tape (4) were supported by the other adjacent antifouling pressure-sensitive adhesive tapes (4).

### [Example A-5]

### (Antifouling pressure-sensitive adhesive tape)

An ether-based urethane resin film (manufactured by Fait Plast, product name: "EST-001," thickness: 100 µm) was used as the base material layer (A). A release film on one side of a commercially available pressure-sensitive adhesive (manufactured by Nitto Denko Corporation, product name: "No. 591") was peeled, and the resultant was bonded as the pressure-sensitive adhesive layer (A) onto one surface of the base material layer (A). Next, an antifouling paint composition (manufactured by CHUGOKU MARINE PAINTS, LTD., product name: "PELLER CLEAN") was applied onto the other surface of the base material layer (A) so that its thickness after drying became 100 µm, and the composition was dried at 150°C for 10 minutes to form an antifouling layer. Thus, an antifouling pressure-sensitive adhesive tape (5) was produced. The construction of the antifouling pressure-sensitive adhesive tape (5) was as follows: the antifouling layer (thickness=100 µm), the base material layer (A) (thickness=100 µm), and the pressure-sensitive adhesive layer (A) (thickness=50 µm).

### (Easily adhering pressure-sensitive adhesive tape)

A PET film (manufactured by Toray Industries, Inc., product name : "LUMIRROR S10, " thickness : 50 µm) was used as the base material layer (B), and the wet tension of one surface of the film was set to 48 mN/m by subjecting the surface to surface modification based on corona treatment. A release film on one side of a commercially available pressure-sensitive adhesive (manufactured by Nitto Denko Corporation, product name: "No. 5919") was peeled, and the resultant was bonded as the pressure-sensitive adhesive layer (B) onto the surface of the base material layer (B) not subjected to the corona treatment. Thus, an easily adhering pressure-sensitive adhesive tape (5) was produced. The construction of the easily adhering pressure-sensitive adhesive tape (5) was as follows: the base material layer (B) (thickness=50 µm) and the pressure-sensitive adhesive layer (B) (thickness=50 µm). In addition, the easily adhering pressure-sensitive adhesive tape (5) had a width of 50 mm.

The easily adhering pressure-sensitive adhesive tapes (5) and the antifouling pressure-sensitive adhesive tapes (5) were bonded onto the surface of a ship made of an FRP in contact with water in the same manner as in Example A-1. After that, an attempt was made to forcibly peel the antifouling pressure-sensitive adhesive tape (5). As a result, the tape was able to be peeled up to its adhesion point with the easily adhering pressure-sensitive adhesive tape (5), but could not be peeled beyond the adhesion point because the adhesion of the antifouling pressure-sensitive adhesive tape (5) and the easily adhering pressure-sensitive adhesive tape (5) at the adhesion point was extremely strong. In addition, the peeling of the easily adhering pressure-sensitive adhesive tape (5) did not progress because both sides of the adhesion points of the easily adhering pressure-sensitive adhesive tape (5) were supported by the other adjacent antifouling pressure-sensitive adhesive tapes (5).

### [Example A-6]

### (Antifouling pressure-sensitive adhesive tape)

An ether-based urethane resin film (manufacturedbyFait Plast, product name: "EST-001," thickness: 200 µm) was used as the base material layer (A). A release film on one side of a commercially available pressure-sensitive adhesive (manufactured by Nitto Denko Corporation, product name: "No. 591") was peeled, and the resultant was bonded as the pressure-sensitive adhesive layer (A) onto one surface of the base material layer (A). Next, an antifouling paint composition (manufactured by CHUGOKU MARINE PAINTS, LTD., product name: "PELLER CLEAN") was applied onto the other surface of the base material layer (A) so that its thickness after drying became 100 µm, and the composition was dried at normal temperature for 24 hours to form an antifouling layer. Thus, an antifouling pressure-sensitive adhesive tape (6) was produced. The construction of the antifouling pressure-sensitive adhesive tape (6) was as follows: the antifouling layer (thickness=100 µm), the base material layer (A) (thickness=200 µm), and the pressure-sensitive adhesive layer (A) (thickness=50 µm).

### (Easily adhering pressure-sensitive adhesive tape)

A PET film (manufactured by Toray Industries, Inc., product name: "LUMIRROR S10, " thickness: 50 µm) was used as the base material layer (B), and the wet tension of one surface of the film was set to 47 mN/m by subjecting the surface to surface modification based on atmospheric plasma treatment (helium: oxygen=98:2, RF output: 300 W). A release film on one side of a commercially available pressure-sensitive adhesive (manufactured by Nitto Denko Corporation, product name: "No. 5919") was peeled, and the resultant was bonded as the pressure-sensitive adhesive layer (B) onto the surf ace of the base material layer (B) not subjected to the atmospheric plasma treatment. Thus, an easily adhering pressure-sensitive adhesive tape (6) was produced. The construction of the easily adhering pressure-sensitive adhesive tape (6) was as follows: the base material layer (B) (thickness=50 µm) and the pressure-sensitive adhesive layer (B) (thickness=50 µm). In addition, the easily adhering pressure-sensitive adhesive tape (6) had a width of 50 mm.

The easily adhering pressure-sensitive adhesive tapes (6) and the antifouling pressure-sensitive adhesive tapes (6) were bonded onto the surface of a ship made of an FRP in contact with water in the same manner as in Example A-2. After that, an attempt was made to forcibly peel the antifouling pressure-sensitive adhesive tape (6). As a result, the tape was able to be peeled up to its adhesion point with the easily adhering pressure-sensitive adhesive tape (6), but could not be peeled beyond the adhesion point because the adhesion of the antifouling pressure-sensitive adhesive tape (6) and the easily adhering pressure-sensitive adhesive tape (6) at the adhesion point was extremely strong. In addition, the peeling of the easily adhering pressure-sensitive adhesive tape (6) did not progress because both sides of the adhesion points of the easily adhering pressure-sensitive adhesive tape (6) were supported by the other adjacent antifouling pressure-sensitive adhesive tapes (6).

### [Example A-7]

### (Antifouling pressure-sensitive adhesive tape)

An antifouling pressure-sensitive adhesive tape (7) was produced in the same manner as in Example A-1 except that a commercially available pressure-sensitive adhesive (manufactured by Nitto Denko Corporation, product name: "No. 5919") was used as the pressure-sensitive adhesive layer (A). The construction of the antifouling pressure-sensitive adhesive tape (7) was as follows: the antifouling layer (thickness=100 µm), the base material layer (A) (thickness=150 µm), and the pressure-sensitive adhesive layer (A) (thickness=50 µm).

### (Easily adhering pressure-sensitive adhesive tape)

The base material surface of a commercially available pressure-sensitive adhesive tape (manufactured by Nitto Denko Corporation, product name: "31B," base material layer: PET film, pressure-sensitive adhesive layer: acrylic pressure-sensitive adhesive) was subjected to corona treatment (12 kV, corresponding to 0.5 second). Thus, an easily adhering pressure-sensitive adhesive tape (7) was produced. The resultant easily adhering pressure-sensitive adhesive tape (7) had a width of 30 mm.

The easily adhering pressure-sensitive adhesive tapes (7) and the antifouling pressure-sensitive adhesive tapes (7) were bonded onto the surface of a ship made of an FRP in contact with water in the same manner as in Example A-1. After that, an attempt was made to forcibly peel the antifouling pressure-sensitive adhesive tape (7). As a result, the tape was able to be peeled up to its adhesion point with the easily adhering pressure-sensitive adhesive tape (7), but could not be peeled beyond the adhesion point because the adhesion of the antifouling pressure-sensitive adhesive tape (7) and the easily adhering pressure-sensitive adhesive tape (7) at the adhesion point was extremely strong. In addition, the peeling of the easily adhering pressure-sensitive adhesive tape (7) did not progress because both sides of the adhesion points of the easily adhering pressure-sensitive adhesive tape (7) were supported by the other adjacent antifouling pressure-sensitive adhesive tapes (7).

### [Example B-1]

The antifouling pressure-sensitive adhesive tape (1) and easily adhering pressure-sensitive adhesive tape (1) produced in Example A-1 were used. The easily adhering pressure-sensitive adhesive tapes (1) were bonded onto the bottom portion of a ship made of a fiber-reinforced plastic at a predetermined interval so that the junction between the antifouling pressure-sensitive adhesive tapes (1) to be bonded later was on the easy-adhesion surface of each easily adhering pressure-sensitive adhesive tape. Next, the antifouling pressure-sensitive adhesive tapes (1) were sequentially bonded to be butted against each other without any gap. At this time, the junction between the antifouling pressure-sensitive adhesive tapes (1) was positioned at substantially the center of the easy-adhesion surface of the easily adhering pressure-sensitive adhesive tape (1).

### [Example B-2]

The antifouling pressure-sensitive adhesive tape (2) and easily adhering pressure-sensitive adhesive tape (2) produced in Example A-2 were used. The easily adhering pressure-sensitive adhesive tapes (2) were bonded onto the bottom portion of a boat having a total length of about 8 m at a predetermined interval so that the junction between the antifouling pressure-sensitive adhesive tapes (2) to be bonded later was on the easy-adhesion surface of each easily adhering pressure-sensitive adhesive tape. Next, the antifouling pressure-sensitive adhesive tapes (2) were sequentially bonded to be butted against each other without any gap. Each easily adhering pressure-sensitive adhesive tape (2) deformed enough to be in line with the curved surface of the bottom portion and was bonded onto the surface of the boat with good adhesiveness. An adhesive strength between the easy-adhesion surface of the easily adhering pressure-sensitive adhesive tape (2) and the pressure-sensitive adhesive layer (A) of the antifouling pressure-sensitive adhesive tape (2) was about twice as large as an adhesive strength between the pressure-sensitive adhesive layer (A) of the antifouling pressure-sensitive adhesive tape (2) and the surface of the boat, and hence the peeling of both the tapes resulted in the cohesive failure of the pressure-sensitive adhesive layer (A).

### [Example B-3]

The antifouling pressure-sensitive adhesive tape (3) and easily adhering pressure-sensitive adhesive tape (3) produced in Example A-3 were used. The easily adhering pressure-sensitive adhesive tape (3) was bent and bonded onto a square pole made of steel painted with an anticorrosive paint (manufactured by CHUGOKU MARINE PAINTS, LTD. , product name: "Bannoh 500") to cover its ridge line. Next, the antifouling pressure-sensitive adhesive tapes (3) were bonded to be butted against each other at the ridge line portion. The antifouling pressure-sensitive adhesive tapes (3) strongly adhered to the easy-adhesion surface of the easily adhering pressure-sensitive adhesive tape (3) at their junction, and did not peel even when brought into contact with a water flow from a high-pressure washer manufactured by Karcher.

### [Example B-4]

The antifouling pressure-sensitive adhesive tape (4) and easily adhering pressure-sensitive adhesive tape (4) produced in Example A-4 were used. The easily adhering pressure-sensitive adhesive tape (4) was bonded to cover the tip of the keel portion of a ship bottom, and the antifouling pressure-sensitive adhesive tapes (4) were bonded from both of its sides while being butted against each other so that their junction was arranged at the tip. When an application liquid was used upon bonding of the antifouling pressure-sensitive adhesive tapes (4), the application liquid was able to be removed from the junction without any problem. After that, the keel portion of the ship bottom was left to stand in seawater for 2 months. As a result, the adhesion of an aquatic organism to a gap in the junction was observed. However, the aquatic organism was also able to be easily removed by peeling and removing the easily adhering pressure-sensitive adhesive tape (4) and the antifouling pressure-sensitive adhesive tapes (4), and hence neither direct fouling nor a deposit that was difficult to remove to the ship bottom occurred.

### [Example B-5]

The antifouling pressure-sensitive adhesive tape (5) and easily adhering pressure-sensitive adhesive tape (5) produced in Example A-5 were used. The easily adhering pressure-sensitive adhesive tapes (5) were bonded onto the bottom portion of a boat having a total length of about 8 m at a predetermined interval so that the junction between the antifouling pressure-sensitive adhesive tapes (5) to be bonded later was on the easy-adhesion surface of each easily adhering pressure-sensitive adhesive tape. Next, the antifouling pressure-sensitive adhesive tapes (5) were sequentially bonded to be butted against each other without any gap. Each easily adhering pressure-sensitive adhesive tape (5) deformed enough to be in line with the curved surface of the bottom portion and was bonded onto the surface of the boat with good adhesiveness. An adhesive strength between the easy-adhesion surface of the easily adhering pressure-sensitive adhesive tape (5) and the pressure-sensitive adhesive layer (A) of the antifouling pressure-sensitive adhesive tape (5) was about twice as large as an adhesive strength between the pressure-sensitive adhesive layer (A) of the antifouling pressure-sensitive adhesive tape (5) and the surface of the boat, and hence the peeling of both the tapes resulted in the cohesive failure of the pressure-sensitive adhesive layer (A).

### [Example B-6]

The antifouling pressure-sensitive adhesive tape (6) and easily adhering pressure-sensitive adhesive tape (6) produced in Example A-6 were used. The easily adhering pressure-sensitive adhesive tape (6) was bonded to cover the edge portion of a propeller made of brass. Next, the antifouling pressure-sensitive adhesive tapes (6) were bonded while being butted against each other so that their junction was arranged at the edge portion. After that, the propeller was driven in water but the peeling of the antifouling pressure-sensitive adhesive tapes (6) did not occur.

### [Comparative Example B-1]

The antifouling pressure-sensitive adhesive tapes (1) were bonded onto the bottom portion of a ship made of a fiber-reinforced plastic in the same manner as in Example B-1 except that the easily adheringpressure-sensitive adhesive tape (1) was not used. At this time, the tapes were bonded to be butted against each other without any gap. However, a gap occurred in their junction because a stretching stress at the time of the bonding relaxed with time and the antifouling pressure-sensitive adhesive tapes (1) slightly shrank. Although the size of the gap that had occurred was from about 1 mm to 2 mm, a large amount of barnacles adhered to the gap in an immersion test in seawater (about 1 month in a summer season ranging from August to September). The antifouling pressure-sensitive adhesive tapes (1) were peeled and removed, but the barnacles entered a space between the surface of the bottom portion of the ship and the pressure-sensitive adhesive layer (A) from the gap, and adhered with a strong adhesion strength, and hence their removal required a great deal of labor.

### [Comparative Example B-2]

The same antifouling pressure-sensitive adhesive tapes (1) as those of Example B-1 were bonded onto a propeller made of brass while being butted against each other so that their junction was arranged at its edge portion. After that, the propeller was driven in water. As a result, peeling occurred from the junction owing to its rotation and the resistance of a water flow.

### [Comparative Example B-3]

The antifouling pressure-sensitive adhesive tapes (4) were bonded onto the keel portion of a ship bottom in the same manner as in Example B-4 except that: the easily adhering pressure-sensitive adhesive tape (4) was not used; and the antifouling pressure-sensitive adhesive tapes (4) were bonded while being caused to overlap each other. After that, the keel portion of the ship bottom was left to stand in seawater for 2 months. As a result, part of the antifoulingpressure-sensitive adhesive tapes (4) peeled. This is probably because an application liquid remained at a portion onto which the tapes were bonded while being caused to overlap each other, and hence adhesiveness between the surface of the ship bottom and each antifouling pressure-sensitive adhesive tape (4) reduced.

### Industrial Applicability

The method of preventing fouling of the present invention can be particularly suitably applied to the prevention of the fouling of the surface of an underwater structure in contact with water.

### Reference Signs List

- **100**: antifouling pressure-sensitive adhesive tape
- **200**: easily adhering pressure-sensitive adhesive tape
- **10**: base material layer (A)
- **20**: pressure-sensitive adhesive layer (A)
- **30**: antifouling layer
- **40**: base material layer (B)
- **50**: pressure-sensitive adhesive layer (B)
- **60**: structure

## Claims

1. A method of preventing fouling of a structure, the method comprising the following steps:
(step 1) preparing an anti foul ing pressure-sensitive adhesive tape including a base material layer (A) and a pressure-sensitive adhesive layer (A) formed on one surface side of the base material layer (A), and an easily adhering pressure-sensitive adhesive tape including a base material layer (B) having one surface easily adhering to the pressure-sensitive adhesive layer (A) and a pressure-sensitive adhesive layer (B) formed on another surface side of the base material layer (B); and
(step 2a-1) bonding the easily adhering pressure-sensitive adhesive tape onto a surface of a structure to be prevented from being fouled, and
(step 2a-2) bonding the antifouling pressure-sensitive adhesive tape onto the bonded easily adhering pressure-sensitive adhesive tape so that lengthwise directions of the antifouling pressure-sensitive adhesive tape and the easily adhering pressure-sensitive adhesive tape are non-parallel with each other, or
(step 2b) bonding the two or more antifouling pressure-sensitive adhesive tapes and the at least one easily adhering pressure-sensitive adhesive tape onto a surface of a structure to be prevented from being fouled so that the antifouling pressure-sensitive adhesive tapes are prevented from overlapping each other and a junction between the antifouling pressure-sensitive adhesive tapes is on a surface of the base material layer (B) of the easily adhering pressure-sensitive adhesive tape.

2. A method of preventing fouling of a structure according to claim 1, wherein the step 2a-1 comprises bonding the easily adhering pressure-sensitive adhesive tapes to be parallel with each other.

3. A method of preventing fouling of a structure according to claim 1, wherein the step 2a-1 comprises bonding the easily adhering pressure-sensitive adhesive tapes in a lattice manner.

4. A method of preventing fouling of a structure according to claim 1, wherein the step 2a-1 comprises bonding the easily adhering pressure-sensitive adhesive tapes so that respective lengthwise directions and/or intervals of the easily adhering pressure-sensitive adhesive tapes are random.

5. A method of preventing fouling of a structure according to any one of claims 1 to 4, wherein the step 2a-2 comprises bonding the antifouling pressure-sensitive adhesive tape so that the lengthwise direction of the easily adhering pressure-sensitive adhesive tape and the lengthwise direction of the antifouling pressure-sensitive adhesive tape form an angle of form 30° to 150°.

6. A method of preventing fouling of a structure according to claim 1, wherein the step 2b comprises bonding the antifouling pressure-sensitive adhesive tapes after the easily adhering pressure-sensitive adhesive tape is bonded onto the surface of the structure to be prevented from being fouled.

7. A method of preventing fouling of a structure according to claim 1, wherein the step 2b comprises:
bonding the antifoulingpressure-sensitive adhesive tape onto the surface of the base material layer (B) of the easily adhering pressure-sensitive adhesive tape so that the antifouling pressure-sensitive adhesive tape is shifted by a predetermined width and lengthwise directions thereof are aligned to be substantially parallel with each other; and
bonding two or more sets of the antifouling pressure-sensitive adhesive tape and the easily adhering pressure-sensitive adhesive tape bonded onto each other onto the surface of the structure to be prevented from being fouled while causing the sets to overlap each other with a shift so that the antifouling pressure-sensitive adhesive tapes are prevented from overlapping each other and the junction between the antifouling pressure-sensitive adhesive tapes is on the surf ace of the base material layer (B) of the easily adhering pressure-sensitive adhesive tape.

8. A method of preventing fouling of a structure according to claim 1, wherein the step 2b comprises:
alternately bonding the antifouling pressure-sensitive adhesive tapes and the easily adhering pressure-sensitive adhesive tape so that the antifouling pressure-sensitive adhesive tapes are prevented from overlapping each other and the junction between the antifouling pressure-sensitive adhesive tapes is on the surface of the base material layer (B) of the easily adhering pressure-sensitive adhesive tape; and
bonding the antifouling pressure-sensitive adhesive tapes and the easily adhering pressure-sensitive adhesive tape bonded onto each other onto the surface of the structure to be prevented from being fouled.

9. A method of preventing fouling of a structure according to any one of claims 1 and 6 to 8, wherein the surface of the structure to be prevented from being fouled has a bent portion and the easily adhering pressure-sensitive adhesive tape is arranged at a tip of the bent portion.

10. A method of preventing fouling of a structure according to anyone of claims 1 to 9, wherein the antifoulingpressure-sensitive adhesive tape further includes an antifouling layer on a surface side of the base material layer (A) where the pressure-sensitive adhesive layer (A) is not formed.

11. A method of preventing fouling of a structure according to any one of claims 1 to 10, wherein the surface of the structure to be prevented from being fouled comprises a surface of an underwater structure.

12. A pressure-sensitive adhesive tape set for the method of preventing fouling of a structure according to any one of claims 1 and 6 to 11, the set comprising:
an antifouling pressure-sensitive adhesive tape including a base material layer (A) and a pressure-sensitive adhesive layer (A) formed on one surface side of the base material layer (A); and
an easily adhering pressure-sensitive adhesive tape including a base material layer (B) having one surface easily adhering to the pressure-sensitive adhesive layer (A) and a pressure-sensitive adhesive layer (B) formed on another surface side of the base material layer (B).

13. A pressure-sensitive adhesive tape set according to claim 12, wherein the antifouling pressure-sensitive adhesive tape is bonded onto the surface of the base material layer (B) of the easily adhering pressure-sensitive adhesive tape so that the antifouling pressure-sensitive adhesive tape is shifted by a predetermined width and lengthwise directions thereof are aligned to be substantially parallel with each other.

14. A pressure-sensitive adhesive tape set according to claim 12, wherein the antifouling pressure-sensitive adhesive tapes and the easily adheringpressure-sensitive adhesive tape are alternately bonded so that the antifouling pressure-sensitive adhesive tapes are prevented from overlapping each other and the junction between the antifouling pressure-sensitive adhesive tapes is on the surface of the base material layer (B) of the easily adhering pressure-sensitive adhesive tape.

15. A structure, comprising a surface to be prevented from being fouled, wherein at least part of the surface has bonded thereonto an antifouling pressure-sensitive adhesive tape including a base material layer (A) andapressure-sensitiveadhesivelayer (A) formed on one surface side of the base material layer (A), and an easily adhering pressure-sensitive adhesive tape including a base material layer (B) having one surface easily adhering to the pressure-sensitive adhesive layer (A) and a pressure-sensitive adhesive layer (B) formed on another surface side of the base material layer (B), the antifouling pressure-sensitive adhesive tape being bonded onto the easily adhering pressure-sensitive adhesive tape so that lengthwise directions of the antifouling pressure-sensitive adhesive tape and the easily adhering pressure-sensitive adhesive tape are non-parallel with each other.

16. A structure, comprising a surface to be prevented from being fouled, wherein at least one part of the surface has bonded thereonto two or more antifouling pressure-sensitive adhesive tapes each including a base material layer (A) and a pressure-sensitive adhesive layer (A) formed on one surface side of the base material layer (A), and at least one easily adhering pressure-sensitive adhesive tape including a base material layer (B) having one surface easily adhering to the pressure-sensitive adhesive layer (A) and a pressure-sensitive adhesive layer (B) formed on another surface side of the base material layer (B) so that the antifouling pressure-sensitive adhesive tapes are prevented from overlapping each other and a junction between the antifouling pressure-sensitive adhesive tapes is on a surface of the base material layer (B) of the easily adhering pressure-sensitive adhesive tape.

17. A structure according to claim 15 or 16, wherein the structure comprises an underwater structure.
